Europäisches Patentamt

European Patent Office

Office européen des brevets

(19)

(11) EP 1 106 220 A2

(12) EUROPEAN PATENT APPLICATION

(43) Date of publication:
13.06.2001 Bulletin 2001/24

(51) Int Cl.⁷: $A63F\ 13/10$

(21) Application number: 00310790.1

(22) Date of filing: 05.12.2000

(84) Designated Contracting States:
AT BE CH CY DE DK ES FI FR GB GR IE IT LI LU
MC NL PT SE TR
Designated Extension States:
AL LT LV MK RO SI

(30) Priority: 10.12.1999 JP 35229599

(71) Applicant: Sony Computer Entertainment Inc.
Tokyo 107-0052 (JP)

(72) Inventors:
• Aizu, Takuya, c/o Inti Creates Limited
Ichikawa-shi, Chiba-ken 272-0031 (JP)

• Tsuda, Yoshihisa, c/o Inti Creates Limited
Ichikawa-shi, Chiba-ken 272-0031 (JP)
• Ohkura, Kouji, c/o Inti Creates Limited
Ichikawa-shi, Chiba-ken 272-0031 (JP)
• Kawanishi, Hirokatsu, c/o Inti Creates Limited
Ichikawa-shi, Chiba-ken 272-0031 (JP)

(74) Representative: Turner, James Arthur et al
D. Young & Co.,
21 New Fetter Lane
London EC4A 1DA (GB)

(54) **Entertainment system, entertainment apparatus, recording medium, and program**

(57) An entertainment system has a destruction displaying unit (304) including a damage applying object processing unit (330) for rendering an object (damage applying object) such as a robot (202) carrying a principal character, a monster (212) as a target, or bullets or shells (218) shot from a weapon (216), which applies damage to a background object (220, 222, 224), a destruction determining unit (332) for determining whether the background object (220, 222, 224) is to be destroyed or not based on the positional relationship between the damage applying object (202, 212, 218) and the background object (220, 222, 224), a background object processing unit (334) for rendering the background object (220, 222, 224) as it is being destroyed, and an image displaying unit (336) for outputting image data rendered and stored in a frame buffer (84) to a display monitor (18) to display a corresponding image on the display screen of the display monitor (18).

FIG. 15

EP 1 106 220 A2

**Description**

This invention relates to entertainment systems, entertainment apparatus, recording media and programs.

Some entertainment systems including entertainment apparatus such as video game machines display video game images based on video game data stored in a recording medium such as a CD-ROM or the like on the display screen of a television receiver while allowing the user or game player to play the video game with commands entered via a manual controller.

In those entertainment systems, the entertainment apparatus and the manual controller are usually connected to each other by a serial interface. When a clock signal is supplied from the entertainment apparatus to the manual controller, the manual controller sends key switch information based on the user's control entries in synchronism with the clock signal.

Recently developed manual controllers incorporate a vibration generating means for applying vibrations to the user based on a request from an external apparatus such as an entertainment apparatus, for example. While a video game is in progress, the vibration generating means applies various different kinds of vibrations to the user in response to user's different control entries.

Some video games include shooting games and combat games in which a principal character attempts to knock down another principal object as an opponent using a weapon or part of the body of the principal character.

In such video games, the primary goal to be achieved is for the user or game player to control the principal character to beat the opponent. Therefore, even when the battle between the principal character and the opponent develops into various phases, the background that is not directly related to the principal character's achievements usually remains unchanged. For example, even when bullets or shells shot from the principal character's weapon hit a displayed object other than the opponent, the image of the hit object remains the same, and even when a heavy robot falls onto a displayed ground, the image of the displayed ground does not change at all.

Insofar as the user concentrates on controlling the principal character to defeat the opponent when the user initially tries to become accustomed to the video game, no problem arises out of the above unchanged image details. However, as the user becomes more skilled to play the video game and is able to pay more attention to the displayed background while engaging in the combat, the user tends to lose interest in the video game and find the video game boring by discovering that nothing changes in the background during the battle even when the battle is highly intensive.

In other video games, the user controls a robot or a vehicle which is displayed to shoot a monster or another robot which is also displayed. The user uses a first joystick to control the robot or the vehicle, and uses a second joystick to move a sight.

The viewpoint as seen from the user is changed when the user moves the robot or the vehicle with the first joystick. Therefore, even when the user has aimed correctly at the target with the second joystick, the sight is liable to deviate greatly from the target as the viewpoint is changed by the first joystick. Therefore, the user is unable to aim at the target quickly.

Furthermore, some shooting or combat video games display a radar indicating the position of the opponent at a corner of the displayed view, and the user finds it awkward to see the radar thus displayed.

Various respective aspects and features of the invention are defined in the appended claims.

Embodiments of the present invention relate to an entertainment system having at least one manual controller connected to an entertainment apparatus which executes various programs, for entering control requests from the user into the entertainment apparatus, an entertainment apparatus which executes various programs, a recording medium storing a program and data that are used by the entertainment system, and a program itself.

Embodiments of the present invention can provide an entertainment system and a recording medium which display realistic images in video games that are played for the purpose of beating the opponent, by changing the displayed background depending on combat details.

Another object of the present invention is to provide an entertainment system, an entertainment apparatus, a recording medium, and a program which are capable of changing the viewpoint depending on the direction in which the sight is moved, allowing the user to independently control a displayed robot and move a sight while changing the viewpoint, for example, so that the user can make better control actions in shooting games, for example.

According to an aspect of the present invention, an entertainment system comprises an entertainment apparatus for executing various programs, at least one manual controller for entering control requests from the user into the entertainment apparatus, a display unit for displaying images outputted from the entertainment apparatus, and destruction displaying means for determining whether a background object which is being displayed on the display unit is destroyed or not based on positional information of the displayed background object and positional information of a damage applying object, and displaying the background object in a destroyed sequence if the background object has been determined as being destroyed.

According to another aspect of the present invention, an entertainment apparatus for connection to a manual controller for outputting a control request from the user, and a display unit for displaying images, comprises destruction displaying means for determining whether a background object which is being displayed on the display unit is destroyed or not based on positional information of the displayed background object and positional information of a damage applying object, and displaying the background object in a destroyed sequence if the background object has been determined as being destroyed.

According to still another aspect of the present invention, there is provided a recording medium storing a program and data for use in an entertainment system having an entertainment apparatus for executing various programs, at least one manual controller for entering control requests from the user into the entertainment apparatus, and a display unit for displaying images outputted from the entertainment apparatus, the program comprising the steps of determining whether a background object which is being displayed on the display unit is destroyed or not based on positional information of the displayed background object and positional information of a damage applying object, and displaying the background object in a destroyed sequence if the background object has been determined as being destroyed.

According to yet another aspect of the present invention, there is provided a program readable and executable by a computer, for use in an entertainment system having an entertainment apparatus for executing various programs, at least one manual controller for entering control requests from the user into the entertainment apparatus, and a display unit for displaying images outputted from the entertainment apparatus, the program comprising the steps of determining whether a background object which is being displayed on the display unit is destroyed or not based on positional information of the displayed background object and positional information of a damage applying object, and displaying the background object in a destroyed sequence if the background object has been determined as being destroyed.

The damage applying object may be bullets or shells shot from a weapon, a principal object as a principal character, or a principal object as an opponent such as a monster. The background object may be a building, a road, a railroad, an automobile, or a bridge which can be destroyed by a monster.

When the damage applying object hits the background object, the background object is determined to be destroyed, and displayed in a destroyed sequence. For example, when a monster hits a building, the building is displayed as collapsing, and when a heavy robot is landed on the ground, a road is displayed as being concaved.

Therefore, even if the primary goal to be achieved in a video game is for the user or game player to control the principal character to beat the opponent such as a monster, the background displayed in the video game can be changed depending on details of the battle between the principal character and the opponent, resulting in realistic images displayed in the video game. The user can therefore experience simulated combats or battles between the principal character and the opponent, and remains interested in the video game.

The destruction displaying means or step may comprise determining means for, or the step of, determining whether the background object is to be destroyed or not based on the positional information of the background object and the positional information of the damage applying object, display form selecting means for, or the step of, selecting a form of destruction depending on the type of the background object to be destroyed, and rendering means for, or the step of, displaying the background object in a destroyed sequence according to rules of the selected form of destruction.

In this manner, a destroyed sequence depending on the type of the background object is displayed. For example, if the background object is a building, then it is displayed in a destroyed sequence of "collapsing" or "being tilted". If the background object is a road, then it is displayed in a destroyed sequence of "being concaved". If the background object is a railroad, then it is rendered in a destroyed sequence of "being bent" or "being cut off". In the destroyed sequence of the building, it may be displayed as collapsing while producing black smokes or flames.

The determining means or step may comprise means for, or the step of, destroying the background object in display if the positional information of the damage applying object is included in the positional information of the background object.

According to yet still another aspect of the present invention, an entertainment system comprises an entertainment apparatus for executing various programs, at least one manual controller for entering control requests from the user into the entertainment apparatus, a display unit for displaying images outputted from the entertainment apparatus, and viewpoint changing means for displaying, on the display unit, a frame to change a viewpoint and a sight movable in the frame depending on a control input entered from the manual controller by the user, and changing the viewpoint in the direction depending on the control input entered by the user when the sight approaches the frame.

According to a further aspect of the present invention, an entertainment apparatus for connection to a manual controller for outputting a control request from the user, and a display unit for displaying images, comprises viewpoint changing means for displaying, on the display unit, a frame to change a viewpoint and a sight movable in the frame depending on a control input entered from the manual controller by the user, and changing the viewpoint in the direction depending on the control input entered by the user when the sight approaches the frame.

According to a still further aspect of the present invention, there is provided a recording medium storing a program and data for use in an entertainment system having an entertainment apparatus for executing various programs, at least one manual controller for entering control requests from the user into the entertainment apparatus, and a display unit for displaying images outputted from the entertainment apparatus, the program comprising the steps of displaying, on the display unit, a frame to change a viewpoint and a sight movable in the frame depending on a control input entered from the manual controller by the user, and changing the viewpoint in the direction depending on the control input entered by the user when the sight approaches the frame.

According to a yet further aspect of the present invention, there is provided a program readable and executable by a computer, for use in an entertainment system having an entertainment apparatus for executing various programs, at least one manual controller for entering control requests from the user into the entertainment apparatus, and a display unit for displaying images outputted from the entertainment apparatus, the program comprising the steps of displaying, on the display unit, a frame to change a viewpoint and a sight movable in the frame depending on a control input entered from the manual controller by the user, and changing the viewpoint in the direction depending on the control input entered by the user when the sight approaches the frame.

For changing the viewpoint, the indicia (sight) is moved closely to the frame in the direction in which to change the viewpoint. The viewpoint changing means or step changes the viewpoint in the direction depending on the control input from the user when the indicia (sight) approaches the frame.

For example, if the frame is of a circular shape, then when the indicia (sight) contacts a right region (in the direction of 3 PM) of the circular frame, the viewpoint is changed to the right, and when the indicia (sight) contacts an upper right region (in the direction of 2 PM) of the circular frame, the viewpoint is changed upward to the right.

Therefore, it is possible to change the viewpoint in the direction in which the sight moves. The user can independently control a robot and set the sight while changing the viewpoint, and hence can easily make control actions in video games such as shooting games and combat games.

The viewpoint changing means or step may comprise means for, or the step of, changing the viewpoint in display at a speed depending on the control input entered by the user. The viewpoint moves at a speed depending on the tilted angle of a joystick. Thus, the user can move the viewpoint slowly or quickly depending on the situation in which the principal character is placed, e.g., when the principal character searches the surrounding area or in case of emergency, e.g., when a monster appears. With the viewpoint being thus movable, the user finds themselves more easily absorbed in the video game, and remains interested in the video game for a long period of time.

The viewpoint changing means or step may comprise appearance direction displaying means for, or the step of, displaying an indicia, indicative of a direction in which a principal object will appear, closely to the frame. The displayed indicia allows the user to have an instantaneous recognition of the direction in and the height at which the opponent will appear. When the user brings the sight into contact with the region of the frame where the indicia is displayed, the viewpoint is changed in the direction of the opponent, allowing the user to set the sight quickly on the opponent.

The invention will now be described by way of example with reference to the accompanying drawings, throughout which like parts are referred to by like references, and in which:

FIG. 1 is a perspective view of an entertainment system according to the present invention;
FIG. 2 is a perspective view of a manual controller;
FIG. 3 is a plan view of the manual controller;
FIG. 4 is a diagram showing the relationship between vertical and horizontal values achieved when left and right joysticks are operated;
FIG. 5 is a perspective view showing the manner in which the manual controller is used;
FIG. 6 is a bottom view, partly broken away, of the manual controller, showing vibration imparting mechanisms disposed respectively in left and right grips thereof;
FIG. 7 is a block diagram of a circuit arrangement of an entertainment apparatus;
FIG. 8 is a block diagram of the manual controller;
FIG. 9 is a block diagram of components for carrying out bidirectional serial communications between the manual controller and the entertainment apparatus;
FIG. 10 is a view showing a displayed image on a display monitor which includes a frame, a sight, and an icon;
FIG. 11 is a view showing a displayed image which includes a robot flying upward;
FIG. 12 is a view showing a displayed image which includes a building broken in one way;
FIG. 13 is a view showing a displayed image which includes a building broken in another way;
FIG. 14 is a view showing a displayed image which includes a road broken in one way;
FIG. 15 is a view showing a displayed image which includes a railroad broken in one way;
FIG. 16 is a functional block diagram of a scene generating means according to the present invention;
FIGS. 17 and 18 are a flowchart of a processing sequence of a viewpoint changing means;
FIG. 19 is a flowchart of a processing sequence of a destruction displaying means;
FIG. 20 is a flowchart of a processing sequence of a damage applying object processing means;

FIG. 21 is a diagram showing details of a background object information table;
FIG. 22 is a flowchart of a processing sequence of a destruction determining means; and
FIGS. 23 and 24 are a flowchart of a processing sequence of a background object processing means.

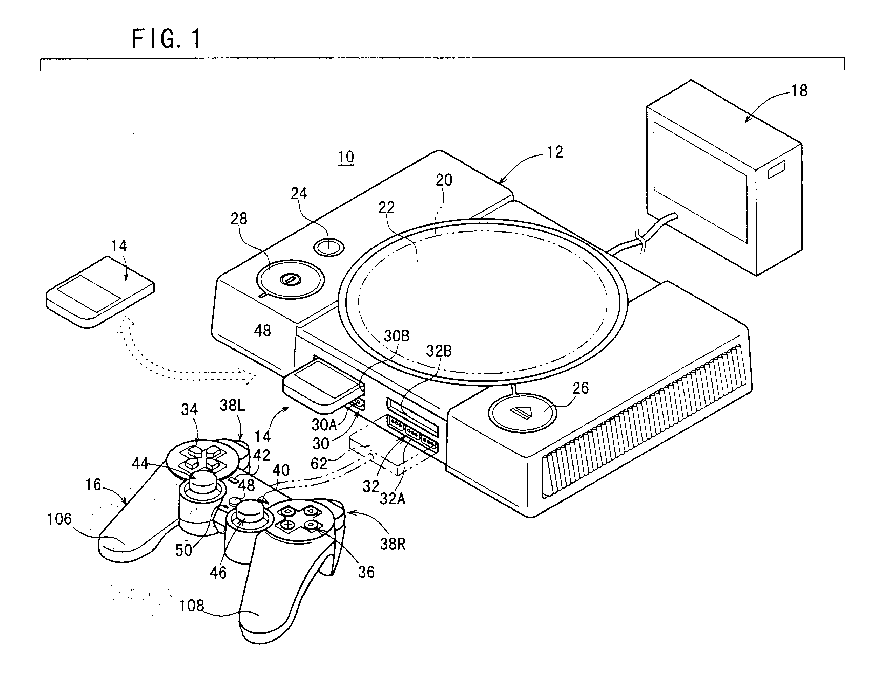

An entertainment system and an entertainment apparatus according to the present invention as applied to a video game apparatus, and a recording medium and a program according to the present invention as applied to a recording medium which stores a program and data to be executed by the video game apparatus and a program to be executed by the video game apparatus will be described below with reference to FIGS. 1 through 24.

As shown in FIG. 1, an entertainment system 10 basically comprises an entertainment apparatus 12 for executing various programs, a memory card 14 detachably connected to the entertainment apparatus 12, a manual controller 16 detachably connected to the entertainment apparatus 12 by a connector 52, and a display monitor 18 such as a television receiver which is supplied with video and audio output signals from the entertainment apparatus 12.

The entertainment apparatus 12 reads a program recorded in a mass storage medium such as an optical disk 20 such as a CD-ROM or the like, and executes a game, for example, based on the program depending on commands supplied from the user, e.g., the game player, via the manual controller 16. The execution of the game mainly represents controlling the progress of the game by controlling the display of images and the generation of sounds on the display monitor 18 based on manual input actions entered from the manual controller 16 via the connector 62.

The entertainment apparatus 12 has a substantially flat casing in the shape of a rectangular parallelepiped which houses a disk loading unit 22 disposed centrally for loading an optical disk 20 for supplying an application program and data for a video game or the like. The casing supports a reset switch 24 for resetting a program which is being presently executed, a disk control switch 26 for controlling the loading of the optical disk 20, a power supply switch 28, and two slots 30, 32.

The entertainment apparatus 12 may be supplied with the application program via a communication link, rather than being supplied from the optical disk 20 as the recording medium.

The slots 30, 32 have respective upper slot units 30B, 32B and respective lower slot units 30A, 32A. Two manual controllers 16 may be connected respectively to the lower slot units 30A, 32A, and memory cards 14 or portable information terminals (not shown) having the function of the memory card 14 for storing flags indicative of interim game data may be connected respectively to the upper slot units 30B, 32B. The slots 30, 32 (the upper slot units 30B, 32B and the lower slot units 30A, 32A) are asymmetrically shaped to prevent the connectors 62 and the memory cards 14 from being inserted in the wrong direction.

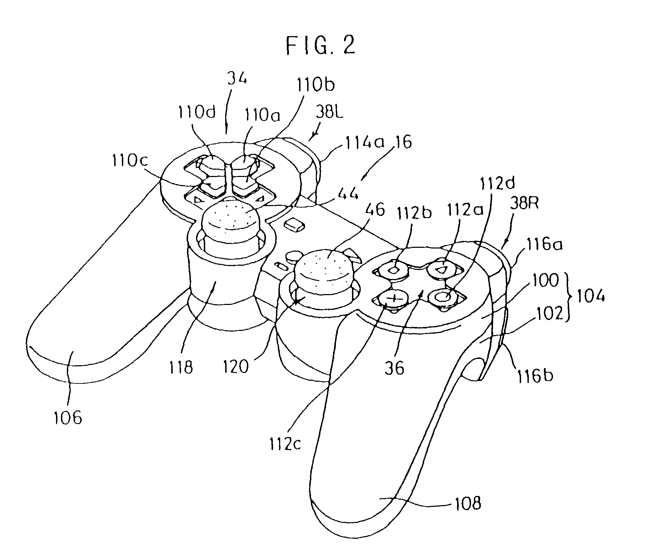

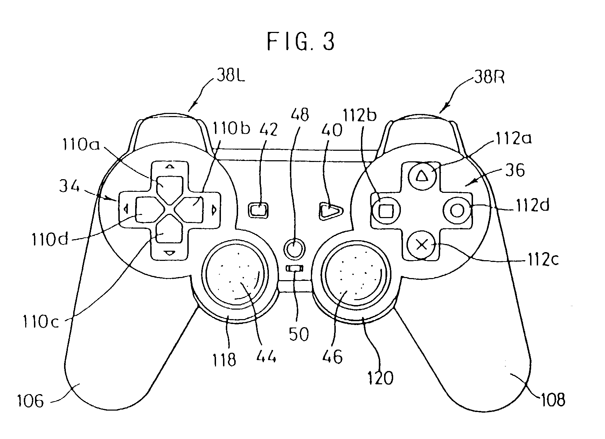

As shown in FIGS. 2 and 3, the manual controller 16 has first and second control pads 34, 36, an L (Left) button 38L, an R (Right) button 38R, a start button 40, and a selection button 42. The manual controller 16 also has joysticks 44, 46 for inputting analog control actions, a mode selection switch 48 for selecting control modes of the joysticks 44, 46, and a mode indicator 50 for indicating a selected control mode. The mode indicator 50 comprises a light-emitting element such as a light-emitting diode or the like.

As shown in FIG. 2, the manual controller 16 has a housing 104 comprising an upper member 100 and a lower member 102 which are mated and joined to each other by fasteners such as screws.

As shown in FIGS. 2 and 3, a pair of left and right grips 106, 108 projects from one side of respective opposite ends of the housing 104. The left and right grips 106, 108 are shaped so as to be gripped by the palms of left and right hands of the user or game player when the manual controller 16 is connected to the entertainment apparatus 12 and information retrieval is carried out or the game is played thereby, for example.

As shown in FIG. 3, the left and right grips 106, 108 are progressively spaced away from each other toward their distal ends. To allow the game player to grip the left and right grips 106, 108 comfortably for a long period of time, the left and right grips 106, 108 are tapered from their joint with the housing 104 toward their distal ends, and have arcuate outer peripheral surfaces and arcuate distal end surfaces.

As shown in FIGS. 2 and 3, the first control pad 34 is disposed on one end of the housing 104 and comprises a first pressable control member (up button) 110a, a second pressable control member (right button) 110b, a third pressable control member (down button) 110c, and a fourth pressable control member (left button) 110d. The first through fourth pressable control members 110a, 110b, 110c, 110d project on an upper surface of the housing 104 and are arranged in a crisscross pattern.

The first control pad 34 includes switch elements as signal input elements associated respectively with the first through fourth pressable control members 110a, 110b, 110c, 110d. The first control pad 34 functions as a directional controller for controlling the direction of movement of a displayed game character, for example. When the game player selectively presses the first through fourth pressable control members 110a, 110b, 110c, 110d to turn on or off the switch elements associated respectively with the first through fourth pressable control members 110a, 110b, 110c, 110d, the displayed game character moves in the direction corresponding to the pressed one of the first through fourth pressable control members 110a, 110b, 110c, 110d.

As shown in FIGS. 2 and 3, the second control pad 36 is disposed on the other end of the housing 104 and comprises a first pressable control member (Δ button) 112a, a second pressable control member (□ button) 112b, a third pressable control member (× button) 112c, and a fourth pressable control member (○ button) 112d. The first through fourth pressable control members 112a, 112b, 112c, 112d project on the upper surface of the housing 104 and are arranged in a crisscross pattern.

The first through fourth pressable control members 112a, 112b, 112c, 112d are constructed as independent members, and associated with respective switch elements as signal input elements disposed in the second control pad 36.

The second control pad 36 serves as a function setting/performing unit for setting functions for a displayed game character assigned to the pressable control members 112a - 112d or performing functions of a displayed game character when the switch elements associated with the pressable control members 112a - 112d are turned on.

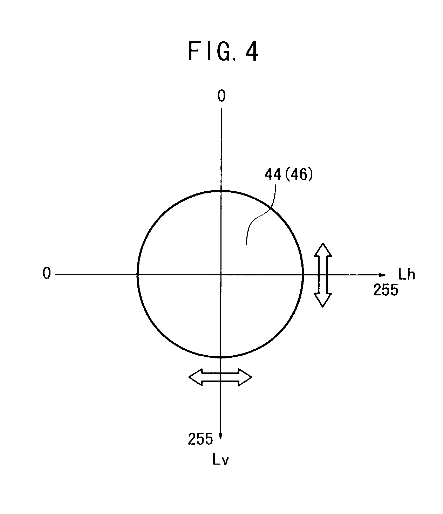

The L button 38L and the R button 38R are disposed on a side of the housing 104 remote from the left and right grips 106, 108 and positioned respectively at the opposite ends of the housing 104. As shown in FIGS. 2 and 4, the L button 38L has a first left pressable control member (L1 button) 114a and a second left pressable control member (L2 button) 114b, and the R button 38R has a first right pressable control member (R1 button) 116a and second right pressable control member (R2 button) 116b, respectively. The L button 38L and the R button 38R have respective switch elements associated respectively with the pressable control members (the L1 button 114a, the L2 button 114b, the R1 button 116a, and the R2 button 116b).

The L button 38L and the R button 38R serve as respective function setting/performing units for setting functions for a displayed game character assigned to the pressable control members 114a, 114b and 116a, 116b or performing functions of a displayed game character when the switch elements associated with the pressable control members 114a, 114b and 116a, 116b are turned on.

As shown in FIGS. 2 and 3, the manual controller 16 also has first and second analog control pads 118, 120 disposed respectively at confronting corners defined between the housing 104 and the proximal ends of the left and right grips 106, 108 which are joined to the housing 104.

The first and second analog control pads 118, 120 have the respective joysticks 44, 46 which can be tilted in all directions (360°) about control shafts thereof, and respective signal input elements such as variable resistors or the like which are operable by the respective joysticks 44, 46. Specifically, the control shafts of the left and right joysticks 44, 46 are normally urged to return to their neutral positions by biasing members. The left and the right joysticks 44, 46 can be freely tilted in all directions (360°) about the axes of the control shafts.

The first and second analog control pads 118, 120 can move a displayed game character while rotating the same or while changing its speed, and can make an analog-like action such as to change the form of a displayed character, when the game player manipulates the joysticks 44, 46. Therefore, the first and second analog control pads 118, 120 are used as a control unit for entering command signals for a displayed character to perform the above movement or action.

As shown in FIG. 4, analog input values which are supplied from the first and second analog control pads 118, 120 when the left and right joysticks 44, 46 are operated include vertical values Lv ranging downward from "0" to "255" and horizontal values Lh ranging rightward from "0" to "255".

The first and second analog control pads 118, 120 can also output other signals than the vertical values Lv and the horizontal values Lh when the left and right joysticks 44, 46 are pressed.

When the mode selection switch 48 is pressed, it can select a control mode for allowing a command signal to be inputted from the first and second analog control pads 118, 120 or a control mode for inhibiting a command signal from being inputted from the first and second analog control pads 118, 120.

When the mode selection switch 48 is pressed, the functions of the first through fourth pressable control members 112a, 112b, 112c, 112d of the second control pad 36, and the functions of the pressable control members 114a, 114b and 116a, 116b of the L button 38L and the R button 38R are changed depending on the control mode selected by the pressed mode selection switch 48. Depending on the control mode selected by the mode selection switch 48, the mode indicator 50 flickers and changes its indication light.

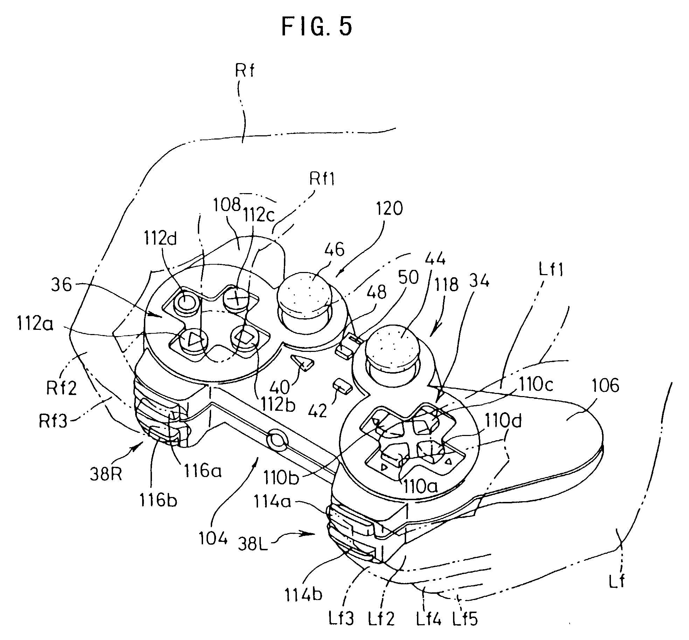

As shown in FIG. 5, the left and right grips 106, 108 projecting from the housing 104 are gripped respectively by the palms of the hands of the game player. The housing 104 is not required to be supported by fingers, and the manual controller 16 can be held by the hands while at least six out of the ten fingers of the hands can freely be moved.

As shown in FIG. 5, when the first and second grips 106, 108 are gripped respectively by the palms of the hands of the game player, the thumbs Lf1, Rf1 of the left and right hands can extend over the joysticks 44, 46 of the first and second analog control pads 118, 120, the first through fourth pressable control members 110a - 110d of the first control pad 34, and the first through fourth pressable control members 112a - 112d of the second control pad 36, and can selectively press the joysticks 44, 46, the pressable control members 110a - 110d, and the pressable control members 112a - 112d.

Since the joysticks 44, 46 of the first and second analog control pads 118, 120 are positioned in confronting relation to the proximal ends of the left and right grips 106, 108 which are joined to the housing 104, when the left and right grips 106, 108 are gripped by the left and right hands, the joysticks 44, 46 are positioned most closely to the thumbs Lf1, Rf1, respectively. Therefore, the joysticks 44, 46 can easily be manipulated by the thumbs Lf1, Rf1.

As shown in FIG. 5, when the left and right grips 106, 108 are gripped respectively by the palms of the hands of the game player, the index fingers Lf2, Rf2 and middle fingers Lf3, Rf3 of the left and right hands can extend over positions where they can selectively press the L1 button 114a, L2 button 114b of the L button 38L and R1 button 116a, R2 button 116b of the R button 38R.

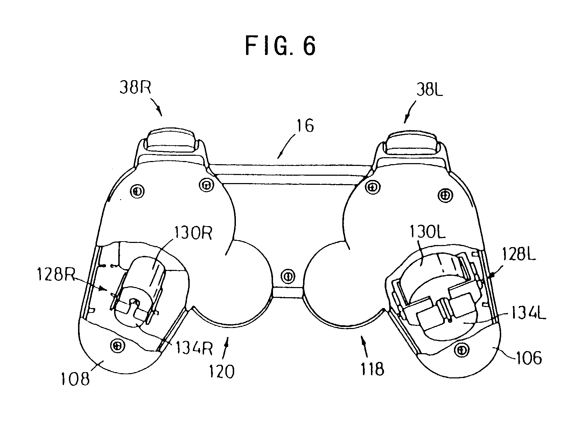

As shown in FIG. 6, the manual controller 16 has a pair of vibration imparting mechanisms 128L, 128R for imparting vibrations to the user in order for the user to be able to play a highly realistic game.

As shown in FIG. 6, the left and right vibration imparting mechanisms 128L, 128R are positioned near the proximal ends of the left and right grips 106, 108 that are held by the hands and fingers when the manual controller 16 is gripped by the user.

Since the both vibration imparting mechanisms 128L, 128R have basically the same structure except their vibration characteristics, only the right vibration imparting mechanism 128R will be described for the purpose of brevity.

The vibration imparting mechanisms 128R comprises a motor 130R energizable by a vibration generating command supplied from the entertainment apparatus 12, and an eccentric member 134R mounted eccentrically on the drive shaft of the motor 130R.

The eccentric member 134R comprises a weight in the form of a heavy metal member having a semicircular cross-_ sectional shape. The weight has an off-center hole defined therein in which the drive shaft of the motor 130R is fitted.

According to the vibration imparting mechanisms 128L, 128R as constructed above, when the motors 130L, 130R are energized, the drive shafts thereof rotate to cause the eccentric members 134L, 134R to rotate in an eccentric motion for thereby generating vibrations, which are imparted to the left grip 106 and the right grip 108. Then, the vibrations of the left grip 106 and the right grip 108 are applied to the hands and fingers of the user.

Next, the vibration characteristics of the vibration imparting mechanisms 128L, 128R disposed in the left grip 106 and the right grip 108 respectively will be described hereinbelow.

The vibration imparting mechanisms 128L, 128R have the different vibration characteristics.

For example, the motor 130L of the left vibration imparting mechanism 128L is bigger than the motor 130R of the right vibration mechanism 128R. The rotational speed of the motor 130L varies according to a vibration value included in a vibration generating command transmitted from the entertainment apparatus 12.

That is, vibrations having different frequencies can be generated depending on the vibration value. In the present embodiment, the vibration frequency of the motor 130L varies in proportion to the vibration value.

In contrast to the motor 130L of the left vibration mechanism 128L, the vibration frequency of the motor 130R of the right vibration mechanism 128R does not vary according to the vibration value included in the vibration generating command. The motor 130R of the right vibration mechanism 128R is simply either energized or de-energized according to the vibration value. If the vibration value (logic value) is "1", the motor 130R of the right vibration mechanism 128R is energized. If the vibration value is "0", the motor 130R of the right vibration mechanism 128R is de-energized. When the motor 130R of the right vibration mechanism 128R is energized, it rotates at a constant speed to generate vibrations at a constant frequency.

In order to energize the motors 130L, 130R to vibrate the manual controller 16 in its entirety, a bidirectional communication function needs to be provided between the manual controller 16 and the entertainment apparatus 12. This bidirectional communication function will be described later on.

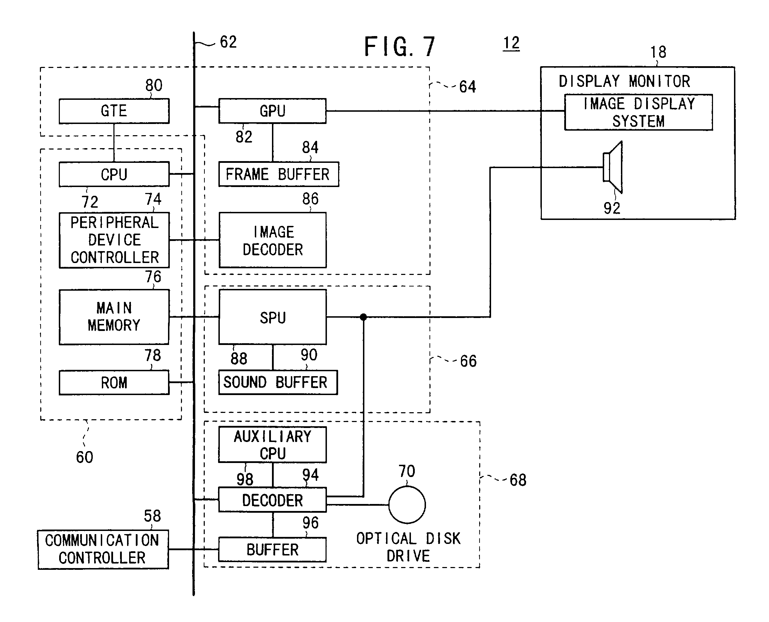

Now, circuit arrangements of the entertainment apparatus 12 and the manual controller 16 will be described below with reference to FIGS. 7 through 9.

As shown in FIG. 7, the entertainment apparatus 12 generally comprises a control system 60, a graphic generating system 64 connected to the control system 60 via a system bus 62, a sound generating system 66 connected to the control system 60 via the system bus 62, and an optical disk_ control system 68 connected to the control system 60 via the system bus 62. A communication controller 58 for controlling data to be inputted to and outputted from the manual controller 16 and the memory card 14 is also connected to the control system 60 via the system bus 62.

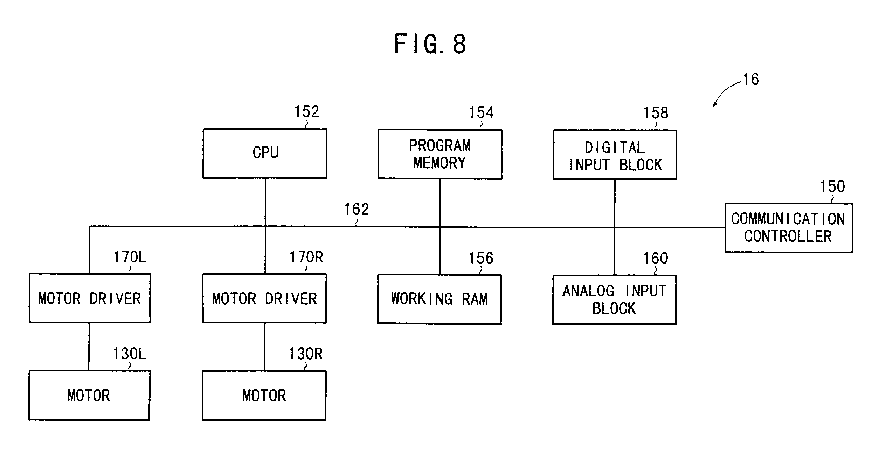

The manual controller 16 supplies commands (including control data) from the user via a communication controller 150 (see FIG. 8) of the manual controller 16 and the communication controller 58 to the entertainment apparatus 12. The optical disk control system 68 includes an optical disk drive 70 in which the optical disk 20, which may comprise a CD-ROM or the like as a specific example of a recording medium according to the present invention.

The control system 60 controls motions of characters displayed on the monitor 18 based on a program and data read from the optical disk 20 and commands supplied from the manual controller 16.

The control system 60 includes a central processing unit (CPU) 72, a peripheral device controller 74 for controlling interrupts and direct memory access (DMA) data transfer, a main memory 76 comprising a random-access memory (RAM), and a read-only memory (ROM) 78 which stores various programs such as an operating system for managing the graphic generating system 64, the sound generating system 66, etc. The main memory 76 can store at least a game program that is supplied from the optical disk 20 and executed by the central processing unit 72.

The CPU 72 controls the entertainment apparatus 12 in its entirety by executing the operating system stored in the ROM 78. The CPU 72 comprises a 32-bit RISC-CPU, for example.

When the entertainment apparatus 12 is turned on, the CPU 72 executes the operating system stored in the ROM 78 to start controlling the graphic generating system 64, the sound generating system 66, etc.

When the operating system is executed, the CPU 72 initializes the entertainment apparatus 12 in its entirety for confirming its operation, and thereafter controls the optical disc control system 68 to execute an application program such as a game program recorded in the optical disk 20.

As the application program such as a game program is executed, the CPU 72 controls the graphic generating system 64, the sound generating system 66, etc. depending on commands entered by the user for thereby controlling the display of images and the generation of music sounds and sound effects.

The graphic generating system 64 comprises a geometry transfer engine (GTE) 80 for performing coordinate transformations and other processing, a graphic processing unit (GPU) 82 for rendering image data according to instructions from the CPU 72, a frame buffer 84 for storing image data rendered by the GPU 82, and an image decoder 86 for decoding image data compressed and encoded by an orthogonal transform such as a discrete cosine transform.

The GTE 80 has a parallel arithmetic mechanism for performing a plurality of arithmetic operations parallel to each other, and can perform coordinate transformations and light source calculations, and calculate matrixes or vectors at a high speed in response to a request from the CPU 72.

Specifically, the GTE 80 can calculate the coordinates of a maximum of 1.5 million polygons per second for a flat shading process to plot one triangular polygon with one color, for example. With the GTE 80, the entertainment apparatus 12 is able to reduce the burden on the CPU 72 and perform high-speed coordinate calculations.

According to an image generating instruction from the CPU 72, the GPU 82 generates and stores the data of a polygon or the like in the frame buffer 84. The GPU 82 is capable of generating and storing a maximum of 360 thousand polygons per second.

The frame buffer 84 comprises a dual-port RAM, and is capable of simultaneously storing image data generated by the GPU 82 or image data transferred from the main memory 76, and reading image data for display. The frame buffer 84 has a storage capacity of 1 Mbytes, for example, and is handled as a 16-bit matrix made up of a horizontal row of 1024 pixels and a vertical column of 512 pixels.

The frame buffer 84 has a display area for storing image data to be outputted as video output data, a CLUT (color look-up table) area for storing a color look-up table which will be referred to by the GPU 82 when it renders a polygon or the like, and a texture area for storing texture data to be subjected to coordinate transformations when a polygon is generated and mapped onto a polygon generated by the GPU 82. The CLUT area and the texture area are dynamically varied as the display area is varied.

The GPU 82 can perform, in addition to the flat shading process, a Gouraud shading process for determining colors in polygons by interpolating intensities from the vertices of the polygons, and a texture mapping process for mapping textures stored in the texture area onto polygons. For performing the Gouraud shading process or texture mapping process, the GTE 80 can perform coordinate calculations for a maximum of about 500,000 polygons per second.

The image decoder 86 is controlled by the CPU 72 to decode image data of a still or moving image stored in the main memory 76, and store the decoded image into the main memory 76.

Image data reproduced by the image decoder 86 is transferred to the frame buffer 84 by the GPU 82, and can be used as a background for an image plotted by the GPU 82.

The sound generating system 66 comprises a sound processing unit (SPU) 88 for generating music sounds, sound effects, etc. based on instructions from the CPU 72, and a sound buffer 90 for storing music sounds, sound effects, etc. generated by the SPU 88. Audio signals representing music sounds, sound effects, etc. generated by the SPU 88 are supplied to audio terminals of the monitor 18. The monitor 18 has a speaker 92 which radiates music sounds, sound effects, etc. generated by the SPU 88 based on the supplied audio signals.

The SPU 88 has an ADPCM (adaptive differential PCM) function for reproducing 16-bit audio data which has been encoded as 4-bit differential audio data by ADPCM, a reproducing function for reproducing waveform data stored in the sound buffer 90 to generate sound effects, etc., and a modulating function for modulating and reproducing the waveform data stored in the sound buffer 90.

The sound system 66 with these functions can be used as a sampling sound source which generates music sounds, sound effects, etc. based on the waveform data stored in the sound buffer 90 according to instructions from the CPU 72.

The optical disk control system 68 comprises an optical disk drive 70 for reproducing application programs and data recorded on the optical disk 20, a decoder 94 for decoding programs and data that are recorded with an error correction code added thereto, and a buffer 96 for temporarily storing data read from the optical disk drive 70 so as to allow the data from the optical disk 20 to be read at a high speed. An auxiliary CPU 98 is connected to the decoder 94.

Audio data recorded on the optical disk 20 which is read by the optical disk drive 70 includes PCM data converted from analog sound signals, in addition to the ADPCM data.

The ADPCM data, which is recorded as 4-bit differential data of 16-bit digital data, is decoded by the decoder 94, supplied to the SPU 88, converted thereby into analog sound signals, and applied to drive the speaker 92.

The PCM data, which is recorded as 16-bit digital data, is decoded by the decoder 94 and then applied to drive the speaker 92.

As shown in FIG. 8, the manual controller 16 comprises a communication controller 150, a CPU 152, a program memory 154, a working RAM 156, a digital input block 158, an analog input block 160, a left motor driver 170L for energizing the left motor 130L, and a right motor driver 170R for energizing the right motor 130R. These components of the manual controller 16 are connected to a bus 162.

The digital input block 158 functions as a manual input controller for the pressable control members 110a - 110d of the first control pad 34 and the pressable control members 112a - 112d of the second control pad 36. The analog input block 160 functions as a manual input controller for the left and right joysticks 44, 46. The digital input block 158 and the analog input block 160 allow the user to enter various items of information into the manual controller 16.

The communication controller 150 has a function to effect serial communications with an external device. The communication controller 150 is electrically connectable to the communication controller 90 (see FIG. 7) of the entertainment apparatus 12, for example, for data communications with the entertainment apparatus 12.

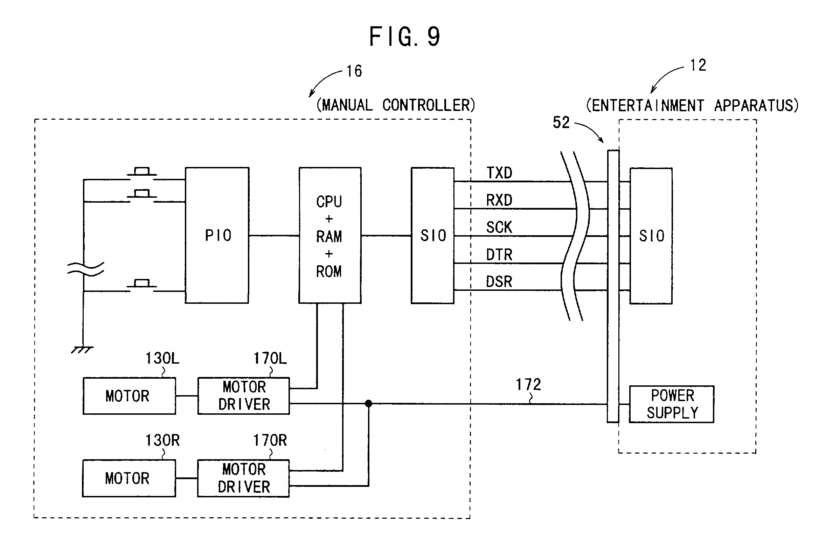

As shown in FIG. 9, the bidirectional communication function between the entertainment apparatus 12 and the manual controller 16 can be performed when the connector 52 capable of performing bidirectional serial communications with the manual controller 16 is connected to the entertainment apparatus 12.

A system in the manual controller 16 for performing the bidirectional communication function comprises a serial I/O interface SIO for performing serial communication with the entertainment apparatus 12, a parallel I/O interface PIO for entering control data from a plurality of control buttons, a one-chip microcomputer comprising a CPU, a RAM, and a ROM, and a pair of motor drivers 170R, 170L for energizing the motors 130R, 130L of the vibration imparting mechanisms 128R, 128L. Each of the motors 130R, 130L is energized by a voltage and a current supplied from the motor drivers 170R, 170L.

A system in the entertainment apparatus 12 for performing the bidirectional communication function comprises a serial I/O interface SIO for performing serial communication with the manual controller 16. When the connector 62 is connected to the serial I/O interface SIO of the entertainment apparatus 12, the serial I/O interface SIO of the entertainment apparatus 12 is connected to the serial I/O interface SIO of the manual controller 16 via the connector 62 for performing bidirectional communications between the entertainment apparatus 12 and the manual controller 16. Other detailed structure of the entertainment apparatus 12 are omitted from illustration in FIG. 9.

Signal and control lines for bidirectional serial communications include a data transfer signal line TXD (Transmit X' for Data) for sending data from the entertainment apparatus 12 to the manual controller 16, a data transfer signal line RXD (Received X' for Data) for sending data from the manual controller 16 to the entertainment apparatus 12, a serial synchronous clock signal line SCK (Serial Clock) for extracting data from the data transfer signal lines TXD, RXD, a control line DTR (Data Terminal Ready) for establishing and cutting off communication with the manual controller 16 as a terminal, and a flow control line DSR (Data Set Ready) for transferring a large amount of data.

The signal and control lines for bidirectional serial communication are accommodated in a cable. This cable further includes a power line 172 extending from a power supply in the entertainment apparatus 12 and connected to the motor drivers 170R, 170L in the manual controller 16 for supply electric energy to energize the motors 130R, 130L.

A process of bidirectional serial communication between the entertainment apparatus 12 and the manual controller 16 will be described below. In order for the entertainment apparatus 12 to communicate with the manual controller 16 to read control data from the digital input block 158 and the analog input block 160, the entertainment apparatus 12 first outputs selection data to the control line DTR. As a result, the manual controller 16 confirms that it is selected by the control line DTR, and then waits for a signal from the signal line TXD. Then, the entertainment apparatus 12 outputs an identification code indicative of the manual controller 16 to the data transfer signal line TXD. The manual controller 16 receives the identification code from the signal line TXD.

When the manual controller 16 recognizes the identification code, the manual controller 16 starts communicating with the entertainment apparatus 12. The entertainment apparatus 12 sends control data via the data transfer signal line TXD to the manual controller 16, which sends control data from the digital input block 158 and the analog input block 160 via the data transfer signal line RXD to the entertainment apparatus 12. In this manner, the entertainment apparatus 12 and the manual controller 16 perform bidirectional serial communications. The bidirectional serial communications will be finished when the entertainment apparatus 12 outputs selection stop data via the control line DTR.

With the bidirectional serial communication function, the manual controller 16 can send mainly control data from the digital input block 158 and the analog input block 160 to the entertainment apparatus 12, and the entertainment apparatus 12 can send vibration generating commands for energizing the motors 130R, 130L of the vibration imparting mechanisms 128R, 128L via the data transfer signal line TXD to the manual controller 16.

The vibration generating commands for energizing the motors 130R, 130L include those which have been established in advance in the optical disk 20 set in the entertainment apparatus 12 and those which are newly generated in the entertainment apparatus 12.

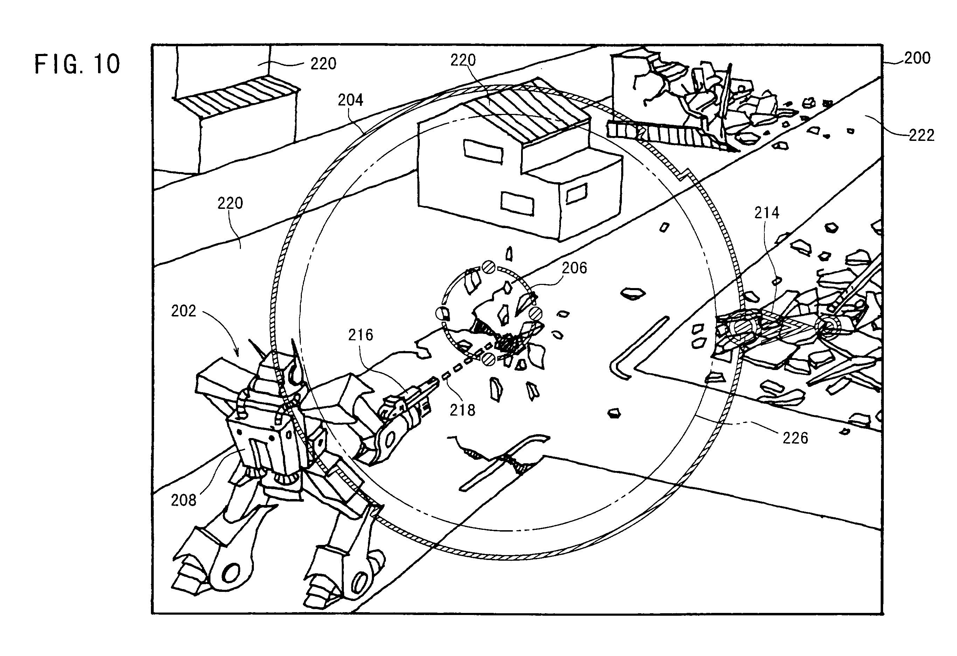

Characteristic functions of the entertainment system 10 according to the present embodiment will be described below with reference to FIGS. 10 through 24.

The characteristic functions of the entertainment system 10 include a destruction displaying function and a viewpoint changing function that are to be performed in a video game.

According to the destruction displaying function, it is determined whether a background object which is being displayed on the display monitor 18 is destroyed or not based on positional information of the displayed background object and positional information of a damage applying object, and a process of destroying the background object is displayed if the background object has been determined as being destroyed.

According to the viewpoint changing function, the display monitor 18 displays a frame for changing the viewpoint as seen from the user and an indicia that is movable in the frame depending on the control input entered by the user, and when the indicia approaches the frame, the viewpoint is changed in the direction depending on the control input entered by the user.

First, the viewpoint changing function will specifically be described below.

When the viewpoint changing function is performed, as shown in FIG. 10, the display monitor 18 displays, on its display screen 200, a robot 202 controllable by the user, a circular frame 204 for changing the viewpoint as seen from the user, and a circular sight 206 movable in the frame 204 depending on the control input entered by the user. Though not displayed on the screen 200, an imaginary second frame 226, indicated by the two-dot-and-dash line, which serves as a boundary for changing the viewpoint, is established inwardly of the frame 204.

When the user operates the left joystick 44, for example, of the manual controller 16 to enter a control input, the robot 202 is moved according to the control input entered by the user. When the user operates the right joystick 46 to enter a control input, the sight 206 is moved according to the control input entered by the user.

Specifically, the robot 202 is moved as follows: When the user tilts the left joystick 44 to the left, for example, the viewpoint is oriented forward and the robot 202 is moved to the left. When the user rotates the left joystick 44 clockwise, the viewpoint is oriented forward and the robot 202 is rotated clockwise.

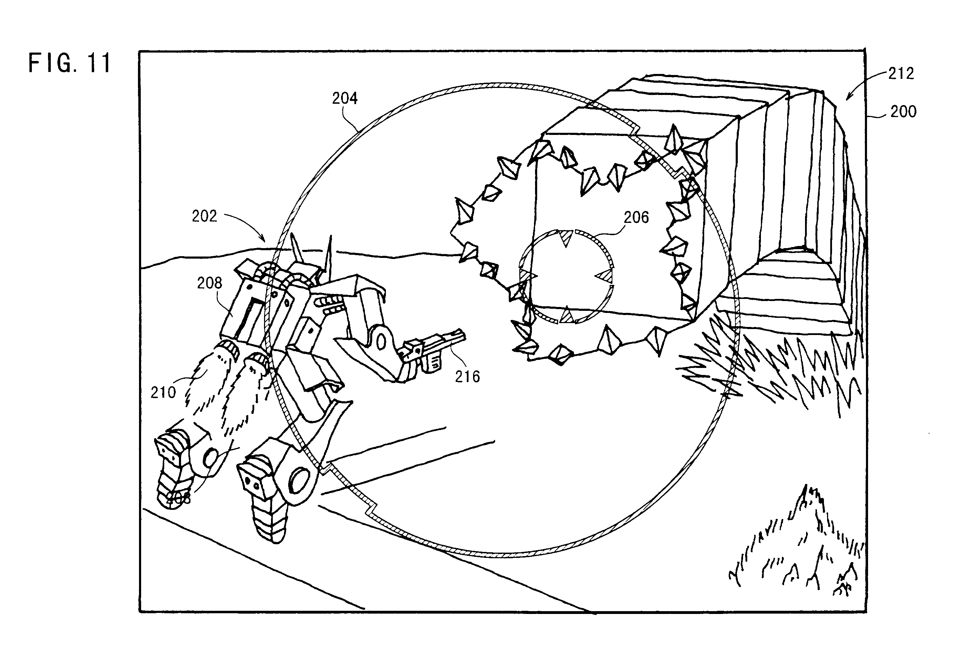

When the user presses in the left joystick 44, as shown in FIG. 11, a booster 208 of the robot 202 is actuated and the robot 202 flies upward. At this time, an image 210 representing flames ejected from the booster 208 may be displayed on the display screen 200.

The sight 206 is moved in the direction in which the user tilts the right joystick 46. For example, when the user tilts the right joystick 46 to the right, the sight 206 is moved to the right. When the sight 206 is moved closely to the frame 204, i.e., when the sight 206 is moved until it contacts the imaginary second frame 226, the viewpoint changes slowly to the right. When the sight 206 is moved to the right and held against the frame 204, the viewpoint changes quickly to the right.

The display monitor 18 also displays on its display screen 200 an icon 214 (see FIG. 10) indicative of a position where a target, e.g., a monster 212 (see FIG. 11) will appear. When the user moves the sight 206 in the direction indicated by the icon 214, the viewpoint changes to the position where the monster 212 will appear.

When the user presses in the right joystick 46, a weapon 216 carried by the robot 202 ejects bullets or shells 218, which are propelled in the direction indicated by the sight 206.

The destruction displaying function will specifically be described below.

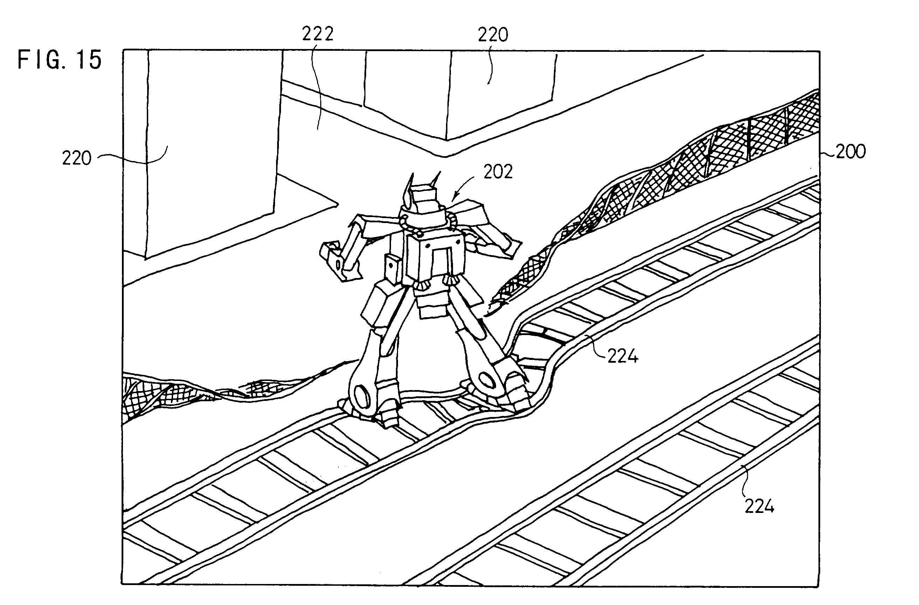

When a displayed damaging object such as the robot 202, the monster 212, or bullets or shells 218 hits a displayed background object such as a building 220, a road 222, or a railroad 224 (see FIG. 15), the displayed background object is destroyed according to a process depending on the type_of the background object.

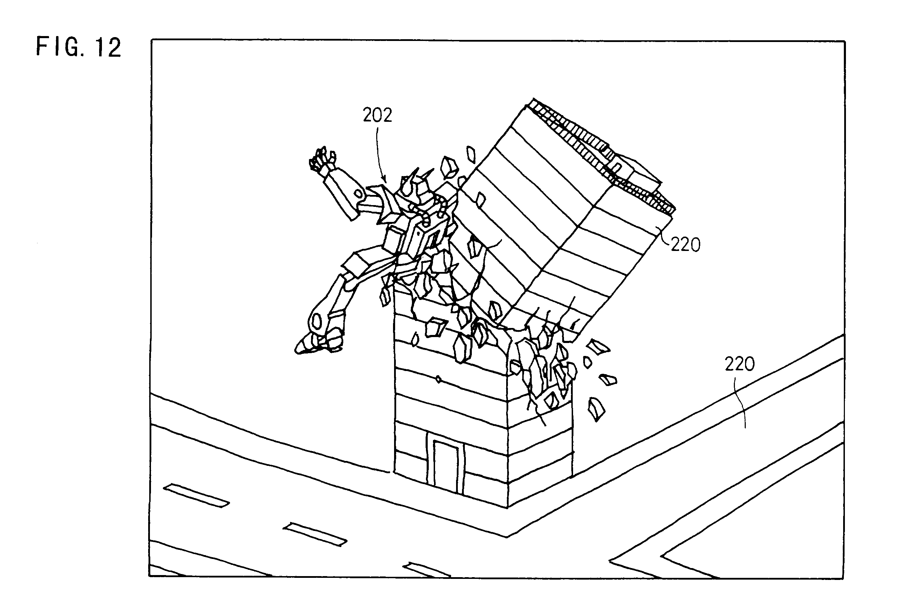

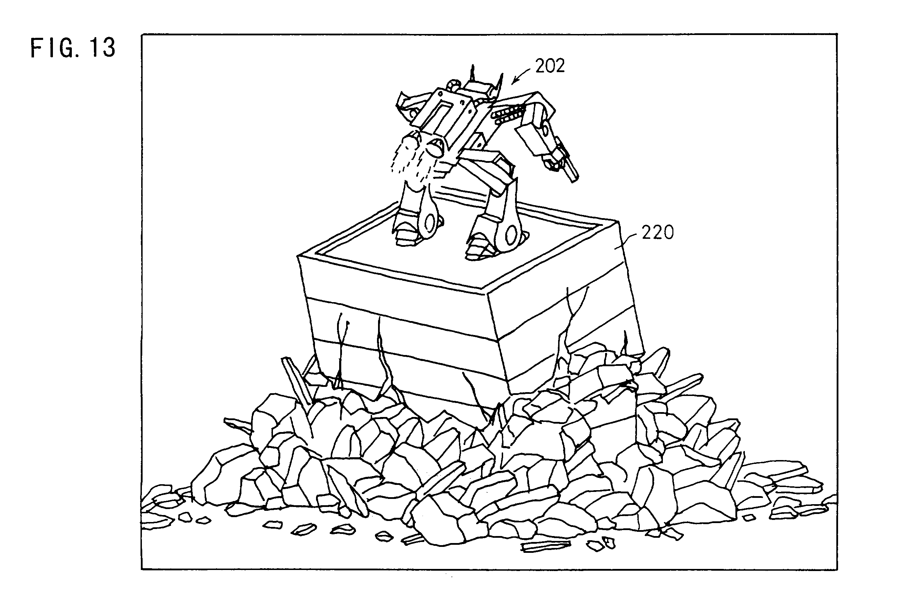

For example, as shown in FIG. 12, when the robot 202 or the monster 212 which is heavy hits the building 220, the building 220 collapses obliquely sideways. As shown in FIG. 13, when the robot 202 or the monster 212 is landed on the building 220, the building 220 collapses vertically. If the building 220 collapses with black smokes or flames, then the destruction of the building 220 is displayed in a realistic scene.

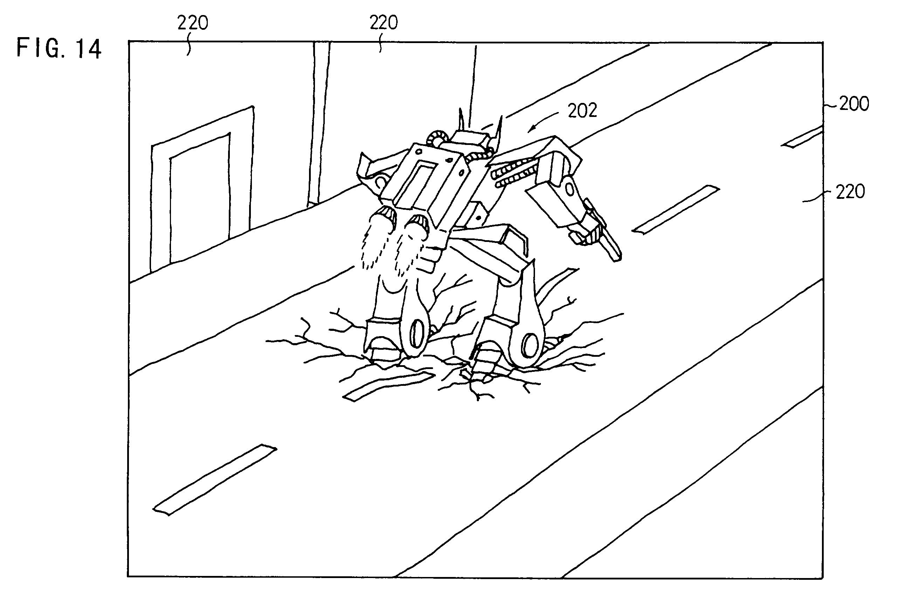

Displayed background objects which can be destroyed may also include the road 222 and the railroad 224 which are usually ignored, thus producing more destruction scenes than available before. For example, as shown in FIG. 14, when the heavy robot 202 is landed on the road 222, the road 222 is displayed as concaved. As shown in FIG. 15, when the heavy robot 202 walks across the railroad 224, the railroad 224 is displayed as being bent. The user can therefore play the video game while experiencing a simulated combat waged by the robot 202.

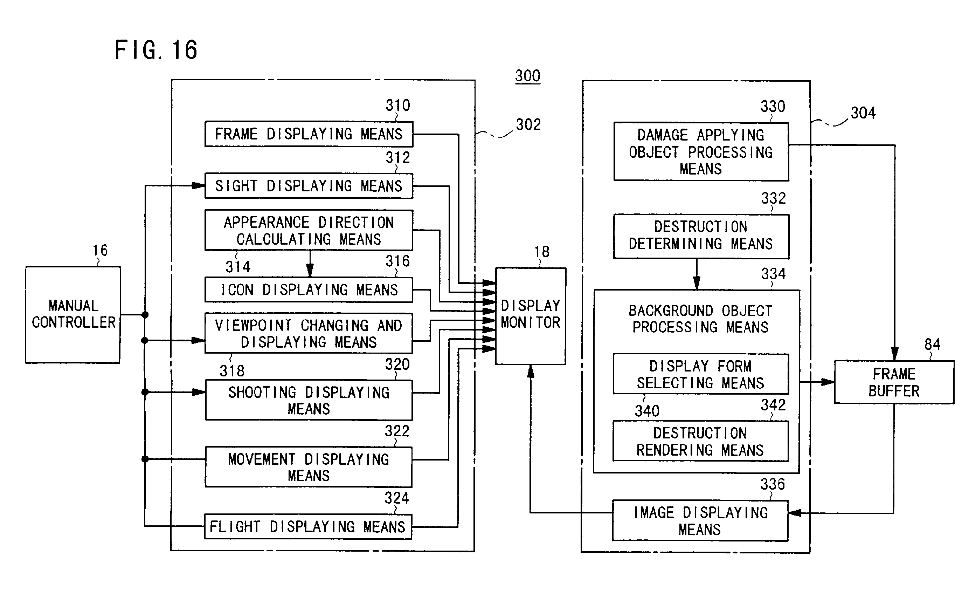

One example of software for performing the above characteristic functions will be described below with reference to FIGS. 16 through 24. As shown in FIG. 16, the software comprises a scene generating means 300.

The scene generating means 300 can be supplied to the entertainment system 10 from a randomly accessible recording medium such as a CD-ROM, the memory card 14, or a network. It is assumed in the present embodiment that the scene generating means 300 is read from the optical disk 20 such as a CD-ROM into the entertainment apparatus 12.

The scene generating means 300 is downloaded in advance from the optical disk 20 played back by the entertainment apparatus 12 into the main memory 76 in the control system 60 thereof according to a predetermined process, and executed by the CPU 72 of the control system 60, as shown in FIG. 7.

As shown in FIG. 16, the scene generating means 300 comprises a viewpoint changing means 302 for displaying, on the display monitor 18, the frame 204 to change the viewpoint and the sight 206 movable in the frame 204 depending on the control input entered by the user, and changing the viewpoint in the direction depending on the control input entered by the user when the sight 206 approaches the frame 204, and a destruction displaying means 304 for determining whether a background object which is being displayed on the display monitor 18 is destroyed or not based on positional information of the displayed background object and positional information of a damage applying object, and displaying the background object in a destroyed sequence if the background object has been determined as being destroyed.

The viewpoint changing means 302 comprises a frame displaying means 310 for displaying the circular frame 204 to change the viewpoint, a sight displaying means 312 for displaying the sight 206 in motion based on a user's action to tilt the right joystick 46, an appearance direction calculating means 314 for calculating a direction in which a target, i.e., the monster 212, appears with respect to the viewpoint when the target appears, an icon displaying means 316 for displaying the icon 214 in an area corresponding to the direction in which the monster 212 appears, a viewpoint changing and displaying means 318 for changing and displaying the viewpoint in the direction depending on the control input entered by the user, based on the movement of the sight 206 closely to the frame 204, a shooting displaying means 320 for displaying a shooting of bullets or shells 218 from the weapon 216 carried by the robot 202 in response to a pressing of the right joystick 46, a movement displaying means 322 for displaying the robot 202 in motion in response to a tilting of the left joystick 44, and a flight displaying means 324 for displaying the robot 202 in flight upward in response to a pressing of the left joystick 44.

The destruction displaying means 304 comprises a damage applying object processing means 330 for rendering an object (damage applying object) such as the robot 202 carrying the principal character, the monster 212 as a target, or bullets or shells 218 shot from the weapon 216, which applies damage to a background object, a destruction determining means 332 for determining whether the background object is to be destroyed or not based on the positional relationship between the damage applying object and the background object, a background object processing means 334 for rendering the background object as it is being destroyed, and an image displaying means 336 for outputting image data rendered and stored in the frame buffer 84 to the display monitor 18 to display a corresponding image on the display screen 200 of the display monitor 18.

The background object processing means 334 comprises a display form selecting means 340 for selecting a form of destruction depending on the type of the background object to be destroyed, and a destruction rendering means 342 for displaying the background object in a destroyed sequence according to the rules of the selected form of destruction.

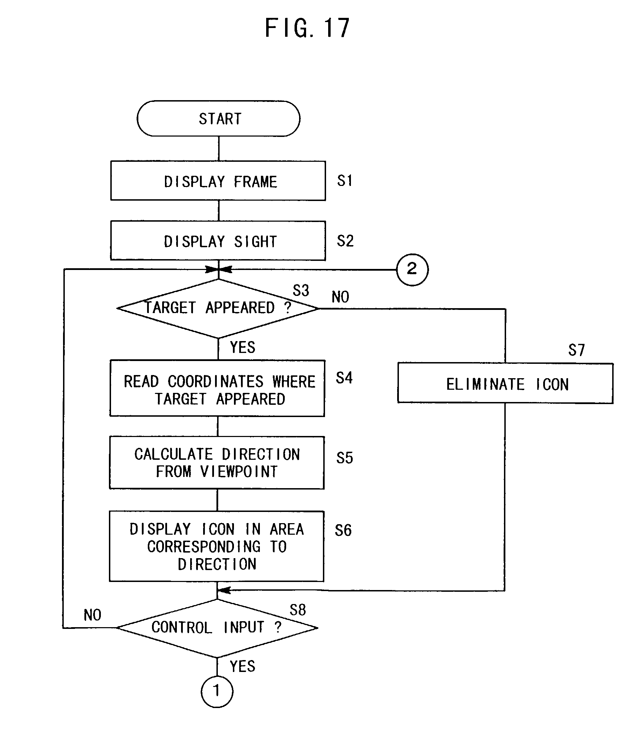

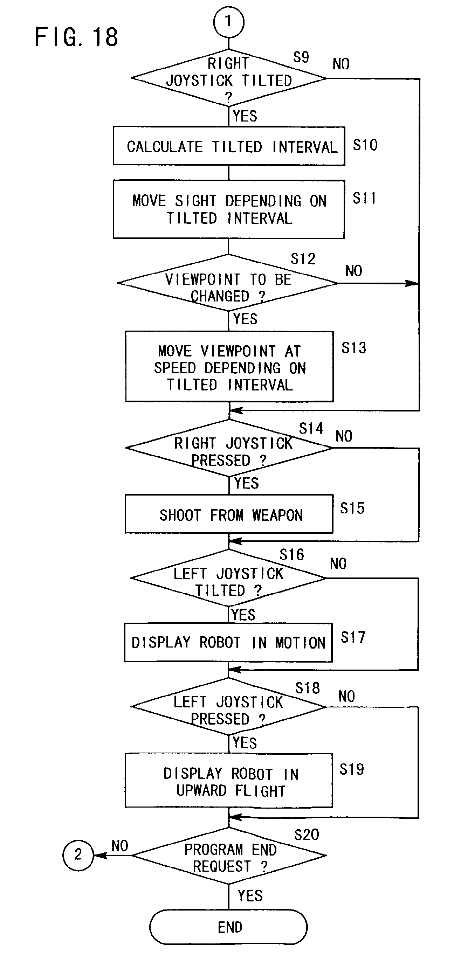

A processing sequence of the viewpoint changing means 302 will be described below with reference to FIGS. 17 and 18.

In step S1 shown in FIG. 17, the frame displaying means 310 of the viewpoint changing means 302 displays the circular frame 204 on the display screen 200 of the display monitor 18 as shown in FIG. 10. Then, in step S2, the sight displaying means 312 displays the circular sight 206 centrally in the frame 204 displayed on the display screen 200.

In step S3, the appearance direction calculating means 314 determines whether a target, i.e., the monster 212, has appeared or not by referring to an information table of registered types of displayed objects or a flag.

If the monster 212 has appeared, then control goes to step S4 in which the appearance direction calculating means 314 reads coordinates where the monster 212 has appeared. These coordinates may be coordinates in a world coordinate system which are used to display a three-dimensional image of the object of the monster 212.

In step S5, the appearance direction calculating means 314 calculates the direction in which the monster 212 has appeared, as seen from the viewpoint, based on the read coordinates. In step S6, the icon displaying means 316 displays the icon 214 indicative of the direction in which the monster 212 has appeared, in an area on the periphery of the frame 204 corresponding to the calculated direction. The displayed icon 214 indicates that the monster 212 has appeared to the right of the viewpoint, though the monster 212 is not shown in FIG. 10.

If the monster 212 has not appeared in step S3, then control goes to step S7 in which the icon displaying means 316 eliminates the icon 214 if the icon 214 is presently displayed.

After step S6 or S7, control goes to step S8 in which the viewpoint changing means 302 determines whether there is a control input entered by the user or not. If there is no control input entered by the user, then control goes back to step S3 to repeat the processing from step S3.

If there is a control input entered by the user in step S8, then control goes to step S9 shown in FIG. 18 in which the viewpoint changing means 302 determines whether the entered control input is a tilting action of the right joystick 46 or not.

If the control input is a tilting action of the right joystick 46, then control proceeds to step S10 in which the viewpoint changing means 302 calculates a tilted interval K of the right joystick 46. The tilted interval K of the right joystick 46 is calculated as follows: Based on the vertical value Lv and the horizontal value Lh of the right joystick 46, a substantial tilted value $K_L$ is determined according to the following equation:

$$K_L = \sqrt{\{(Lv - 128)^2 + (Lh - 128)^2\}}$$

Then, the determined tilted value $K_L$ ($0 \leqq K_L \leqq 127$) is converted into a value (tilted interval K) on a ten-step scale.

In step SII, the sight displaying means 312 moves the presently displayed sight 206 by a distance corresponding to the tilted interval K in the direction in which the right joystick 46 is tilted. When the joystick 46 is tilted back to its upstanding position, the sight 206 returns to a central position in the frame 204.

In step S12, the viewpoint changing means 302 determines whether the viewpoint needs to be changed or not based on whether or not the tilted interval K is equal to or greater than "8". If the tilted interval K is "8", then the sight 206 moves over such a distance that it contacts the imaginary second frame 226, and hence the viewpoint is changed.

Specifically, in step S13, the viewpoint changing and displaying means 318 changes the viewpoint in the direction in which the sight 206 has contacted the second frame 226 or the frame 204, and displays a background object present in the direction of the changed viewpoint in terms of world coordinates.

For example, when the sight 206 contacts a right region of the second frame 226 while staying within the second frame 226, the viewpoint changes slowly to the right, and a background object present on the right-hand side of the robot 202 in terms of world coordinates is displayed. When the sight 206 moves beyond the second frame 226 into contact with the frame 204, the viewpoint changes quickly to the right.

In step S13, the viewpoint moves in the direction in which the joystick 46 is tilted at a speed depending on the tilted interval K. The speed is selected from three speeds. The speed is highest when the tilted interval K is "10", and lowest when the tilted interval K is "8".

If the tilted interval K is of a value ranging from "0" to "7" in the processing in steps S11 through S13, then the sight 206 moves in the frame 204 over a distance corresponding to the tilted interval K.

If the tilted interval K is "8" or "9", then the sight 206 moves in the frame 204 over a distance corresponding to the tilted interval K. Since the sight 206 contacts the imaginary second frame 226, the viewpoint moves at a speed represented by the value of (the tilted interval K - 7 = 1 or 2) and in the direction in which the joystick 46 is tilted.

If the tilted interval K is "10", then the sight 206 moves in the frame 204 over a distance corresponding to the tilted interval K. Since the sight 206 contacts the frame 204, the viewpoint moves at a speed represented by the value of (the tilted interval K - 7 = 3) and in the direction in which the joystick 46 is tilted.

As described above, the viewpoint starts to be changed when the sight 206 approaches the frame 204 to a certain extent. When the tilted interval K is small, the viewpoint is slowly changed. When the sight 206 is brought into contact with the frame 204, the viewpoint is changed at a maximum speed.

In step S14, the viewpoint changing means 302 determines whether the right joystick 46 is pressed or not. If the right joystick 46 is pressed, then control goes to step S15 in which the shooting displaying means 320 displays bullets or shells 218 that are shot from the weapon 216 carried by the robot 202 and kept in flight forward.

In step S16, the viewpoint changing means 302 determines whether the entered control input is a tilting action of the left joystick 44 or not.

If the entered control input is a tilting action of the left joystick 44, then control goes to step S17 in which the movement displaying means 322 displays the robot 202 in motion based on data (coordinate data) of the tilting action of the left joystick 44.

In step S18, the viewpoint changing means 302 determines whether the left joystick 44 is pressed or not. If the left joystick 44 is pressed, then control goes to step S19 in which the flight displaying means 324 displays the robot 202 in flight upward. At this time, the image 210 representing flames ejected from the booster 208 on the back of the robot 202 may be displayed on the display screen 200.

In the above processing in steps S9 through S19, when the left joystick 44 is pressed and tilted to the right and the right joystick 46 is pressed and tilted to the left, the robot 202 flies upward to the right, and shoots bullets or shells 218 to the left.

In step S20, the viewpoint changing means 302 determines whether there is a program end request (gameover or power supply turn-off) with respect to the viewpoint changing means 302 or not. If there is no program end request, then control returns to step S3, and repeats the processing from step S3.

If there is a program end request, then the processing sequence of the viewpoint changing means 302 is put to an end.

A processing sequence of the destruction displaying means 304 will be described below with reference to FIG. 16 and FIGS. 19 through 24.

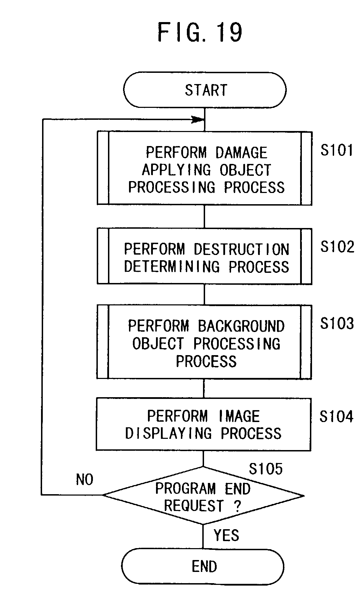

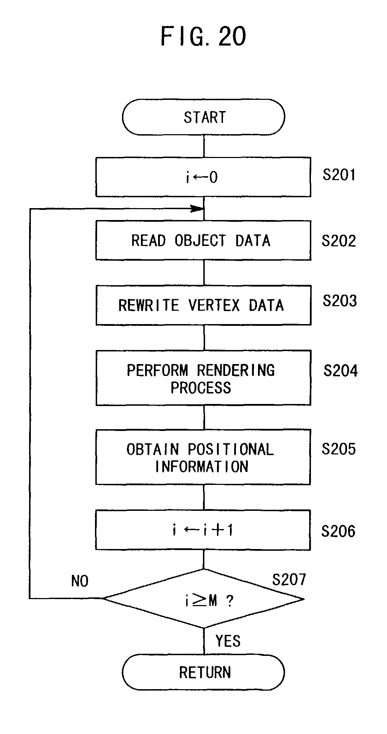

In step S101 shown in FIG. 19, the damage applying object processing means 330 of the destruction displaying means 304 executes its processing sequence. The processing sequence of the damage applying object processing means 330 will be described below with reference to FIG. 20.

In step S201 shown in FIG. 20, the damage applying object processing means 330 stores an initial value "0" in an index register i used to retrieve a damage applying object, thus initializing the index register i.

In step S202, the damage applying object processing means 330 reads object data of an ith damage applying object from an object data file of damage applying objects stored in the optical disk 20, for example.

In step S203, the damage applying object processing means 330 rewrites the vertex data of the object data based on present movement information. In step S204, the damage applying object processing means 330 performs a rendering process based on the object data for thereby rendering and storing a three-dimensional image of the ith damage applying object in the frame buffer 84.

In step S205, the damage applying object processing means 330 obtains positional information from the vertex data of the ith damage applying object.

In step S206, the damage applying object processing means 330 increments the value of the index register i by "+ 1". In step S207, the damage applying object processing means 330 determines whether all damage applying objects have been processed or not based on whether or not the value of the index register i is equal to or greater than the number M of damage applying objects.

If all damage applying objects have not been processed, then control returns to step S202 to perform a rendering process and obtain positional information on a next damage applying object.

If all damage applying objects have been processed, then the processing sequence of the damage applying object processing means 330 is put to an end.

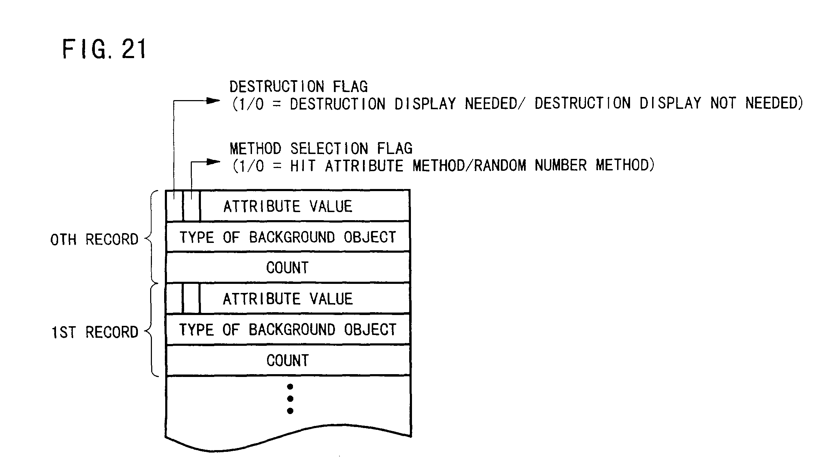

Control then returns to the main routine shown in FIG. 19. In step S102 shown in FIG. 19, the destruction determining means 332 performs its own processing sequence. In the processing sequence, the destruction determining means 332 uses a background object information table. As shown in FIG. 21, the background object information table has a plurality of records of background objects. Each of the records contains a destruction flag indicative of whether a destruction needs to be displayed or not, a method selection flag indicative of a hit attribute method or a random number method, the type of the background object, and a count indicating the level (stage) of a destruction display process.

The hit attribute method or the random number method which is indicated by the method selection flag is used for displaying the background object in a destroyed sequence. For example, when the background object in a displayed sequence is displayed based on movement data in each step of the destruction display process, the hit attribute method or the random number method is used as a method of obtaining an index for selecting a destruction display process data file which is composed of an array of such movement data.

More specifically, if the background object is the building 220, it may collapse obliquely sideways as shown in FIG. 12 or it may collapse vertically as shown in FIG. 13. Whether the building 220 collapses obliquely sideways or vertically depends on the direction in which a damage applying object (e.g., the robot 202) hits the building 220.

In this case, the hit attribute method is used as a method of selecting a destruction display process data file, an attribute value, which is "1" when the background object collapses obliquely sideways and "2" when the background object collapses vertically, is determined in analyzing positional information of the damage applying object and the background object, and a necessary destruction display process data file is searched for based on the type and attribute value of the background object. In this manner, the background object is prevented from being displayed unnaturally and can be displayed in a realistic scene of virtual reality.

According to the random number method, a random number is generated, and a necessary destruction display process data file is searched for based on the type of the background object and the random number. The random number method allows various destruction display processes to be obtained for one type of background object, making it possible to express a destruction scene, which would otherwise tend to be monotonous, as a realistic destruction scene.

Different types of background objects include the building 220 (made of wood, reinforced concrete, etc.), the road 222, the railroad 224, an automobile, a bridge, etc.

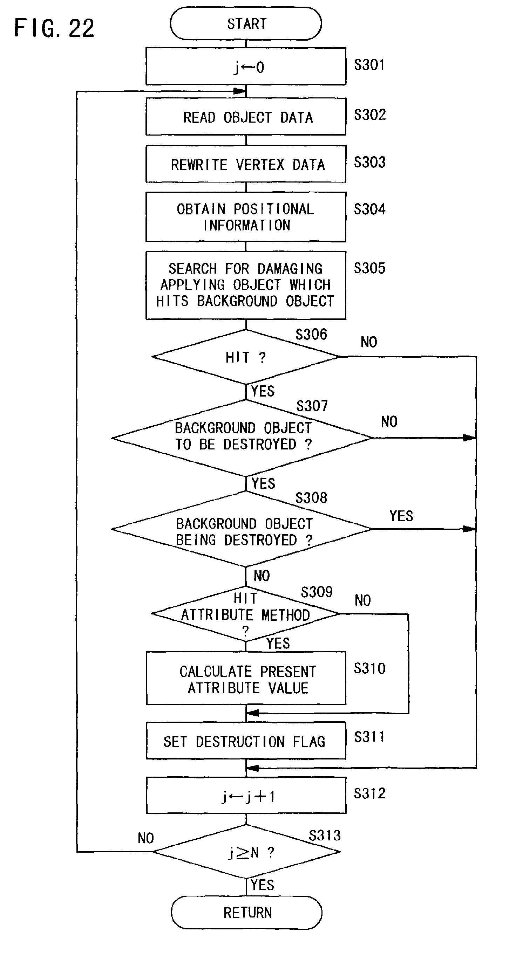

The processing sequence of the destruction determining means 332 will be described below with reference to FIG. 22. In step S301 shown in FIG. 22, the destruction determining means 332 stores an initial value "0" in an index register j used to retrieve a background object, thus initializing the index register j.

In step S302, the destruction determining means 332 reads object data of a jth background object from an object data file of background objects stored in the optical disk 20, for example, and stores the read object data at successive addresses in a working area of the main memory 76.

In step S303, the destruction determining means 332 rewrites the vertex data of the object data based on present movement information. In step S304, the destruction determining means 332 obtains positional information from the vertex data.

In step S305, the destruction determining means 332 conducts a search for a hit on the background object. Specifically, in step S306, the destruction determining means 332 determines whether there is a damage applying object hitting the background object or not, from the positional information of the background object and all positional information, obtained in advance, of damage applying objects.

If there is a damage applying object hitting the background object, then control goes to step S307 in which the destruction determining means 332 determines whether the background object needs to be destroyed in display or not based on whether the damage applying object hitting the background object is bullets or shells 218 or whether the damage applying object hitting the background object is heavier than the background object or not.

If the background object needs to be destroyed in display, then control goes to step S308 in which the destruction determining means 332 determines whether the background object is being destroyed in display or not based on whether the destruction flag in the jth record in the background object information table is set to "1" or not.

If the background object is not being destroyed in display, then control goes to step S309 in which the destruction determining means 332 determines whether the background object is in accordance with the hit attribute method or not based on whether the method selection flag in the jth record in the background object information table is set to "1" or not as shown in FIG. 21.

If the background object is in accordance with the hit attribute method, then control goes to step S310 in which the destruction determining means 332 calculates a present hit attribute based on the positional information of the damage applying object and the positional information of the background object, and determines a value corresponding to the calculated attribute (attribute value). The determined attribute value is stored in the jth record in the background object information table.

After step S310 or if the background object is in accordance with the random number method rather than the hit attribute method in step S309, then control goes to step S311 in which the destruction determining means 332 sets the destruction flag in the jth record in the background object information table to "1".

After step S311, or if the background object is being destroyed in display in step S308, or if the background object does not need to be destroyed in display in step S307, or if there is no damage applying object hitting the background object in step S306, then control goes to step S312 in which the destruction determining means 332 increments the value of the index register j by "+ 1".

In step S313, the destruction determining means 332 determines whether the destruction of all background objects has been determined or not based on whether or not the value of the index register j is equal to or greater than the number N of background objects.

If the destruction of all background objects has not been determined, then control returns to step S302 to determine the destruction of a next background object. If the destruction of all background objects has been determined, then the processing sequence of the destruction determining means 332 is put to an end.

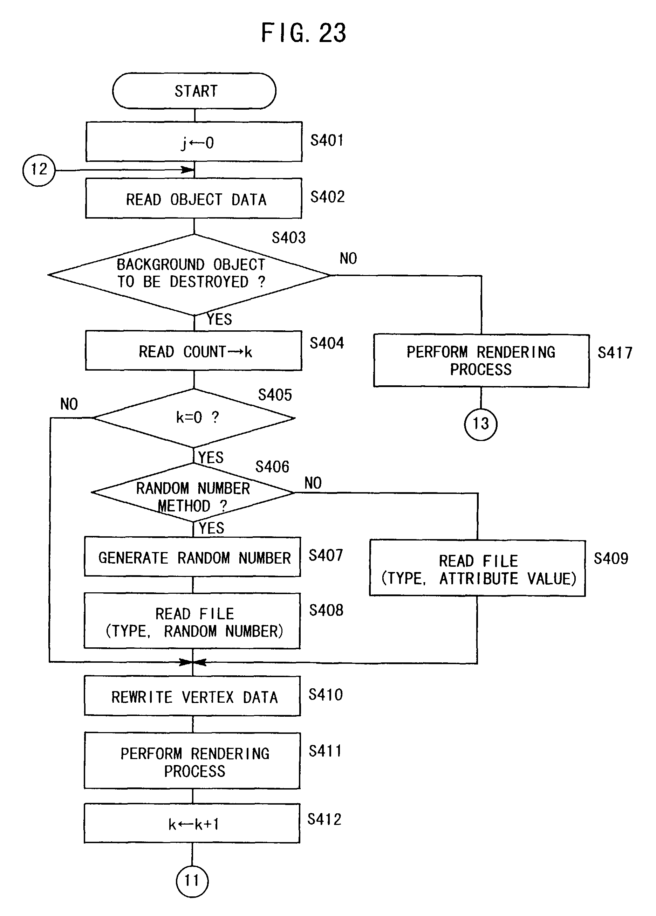

Control then returns to the main routine shown in FIG. 19. In step S103 shown in FIG. 19, the background object processing means 334 performs its processing sequence. The processing sequence of the background object processing means 334 will be described below with reference to FIG. 23. In step S401 shown in FIG. 23, the background object processing means 334 stores an initial value "0" in the index register j used to retrieve a background object, thus initializing the index register j.

In step S402, the background object processing means 334 reads object data of a jth background object from the object data file of background objects stored in the working area of the main memory 76.

In step S403, the background object processing means 334 determines whether the jth background object needs to be destroyed in display or not based on whether the destruction flag in the jth record in the background object information table is set to "1" or not.

If the jth background object needs to be destroyed in display, then control goes to step S404 in which the background object processing means 334 reads the count in the jth record, and stores the read count in an index register k. In step S405, the background object processing means 334 determines whether the background object is to be destroyed in display for the first time or not based on whether the value of the index register k is "0" or not.

If the background object is to be destroyed in display for the first time, then control goes to step S406 in which the background object processing means 334 whether the background object is in accordance with the random number method or not. If the background object is in accordance with the random number method, then control goes to step S407 in which the background object processing means 334 generates a random number. In step S408, the display form selecting means 340 reads a destruction display process data file depending on the type of the background object and the random number, and stores the read destruction display process data file as a jth destruction display process data file in the working area of the main memory 76.

If the background object is in accordance with the hit attribute method rather than the random number method, then control goes to step S409 in which the display form selecting means 340 reads a destruction display process data file depending on the type of the background object and the attribute value, and stores the read destruction display process data file as a jth destruction display process data file in the working area of the main memory 76.

After step S408 or S409 or if the background object is to be destroyed in display not for the first time, then control goes to step S410 in which the background object processing means 334 rewrites the vertex data of the jth object data based on destruction display process data in a kth record in the jth destruction display process data file.

In step S411, the destruction rendering means 342 performs a rendering process based on the jth object data to render and store a three-dimensional image of the jth background object, which is being destroyed, in the frame buffer 84. If the background object is the building 220, then it is rendered in a destroyed sequence of "collapsing" or "being tilted" and stored in the frame buffer 84. If the background object is the road 222, then it is rendered in a destroyed sequence of "being concaved". If the background object is the railroad 224, then it is rendered in a destroyed sequence of "being bent" or "being cut off". At this time, an object of black smokes or flames may also be rendered.

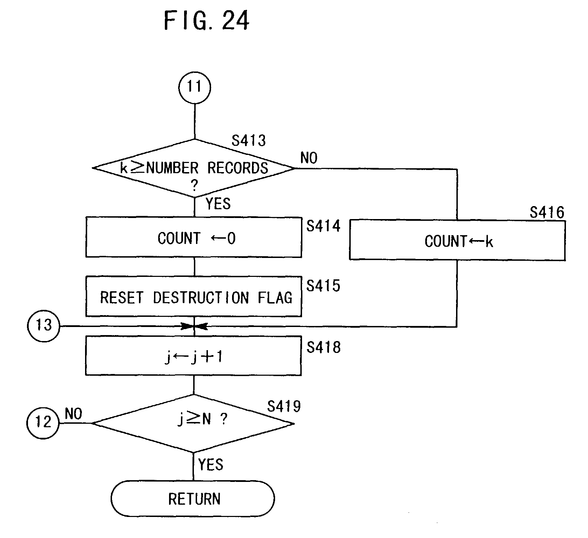

In step S412, the background object processing means 334 increments the value of the index register k by "+ 1". In step S413 shown in FIG. 24, the background object processing means 334 determines whether the rendering process for destroying the background object in display for the last time is finished or not, or more accurately, determines whether a three-dimensional image based on the destruction display process data stored in the final record in the destruction display process data file of the background object has been rendered and stored in the frame buffer 84 or not based on whether or not the value of the index register k is equal to or greater than the number of records in the jth destruction display process data file.

If the rendering process for destroying the background object in display for the last time is finished, then control goes to step S414 in which the background object processing means 334 sets the count in the jth record in the background object information table to "0". In step S415, the background object processing means 334 resets the destruction flag in the jth record to "0".

If the rendering process for destroying the background object in display for the last time is not finished, then control goes to step S416 in which the background object processing means 334 registers the value of the index register k as the count in the jth record in the background object information table.

If the jth background object does not need to be destroyed in display, then control goes to step S417 in which the background object processing means 334 performs a rendering process based on the jth object data, with the vertex data rewritten, stored in the working area of the main memory 76 to render and store a three-dimensional image of the jth background object in the frame buffer 84.

After step S415 or S416 shown in FIG. 24 or after step S417 shown in FIG. 23, control goes to step S418 shown in FIG. 24 in which the background object processing means 334 increments the value of the index register j by "+ 1". Thereafter, in step S419, the background object processing means 334 determines whether the processing of all background objects has been finished or not based on whether or not the value of the index register j is equal to or greater than the number N of background objects.

If the processing of all background objects has not been finished, then control goes back to step S402 shown in FIG. 23 to perform a rendering process for destroying a next background object in display.

If the processing of all background objects has been finished, then the processing sequence of the background object processing means 334 is put to an end.

Control then returns to the main routine shown in FIG. 19. In step S104, the image displaying means 336 outputs image data rendered and stored in the frame buffer 84 to the display monitor 18 to display a corresponding image on the display screen 200 of the display monitor 18. In this manner, the display screen 200 of the display monitor 18 displays three-dimensional images of various damage applying objects and background objects, and a three-dimensional image of a background object that is being destroyed by collision with a damage applying object.

In step S105, the destruction displaying means 304 determines whether there is a program end request (gameover or power supply turn-off) with respect to the destruction displaying means 304 or not. If there is no program end request, then control returns to step S101, and repeats the processing from step S101.

If there is a program end request in step S105, then the processing sequence of the destruction displaying means 304 is ended.

In the entertainment system 10 according to the above embodiment, as described above, it is determined whether a background object which is being displayed on the display monitor is destroyed or not based on positional information of the displayed background object and positional information of a damage applying object, and a process of destroying the background object is displayed if the background object has been determined as being destroyed.

For example, when the damage applying object hits the background object, the background object is determined as being destroyed, and is displayed in a destroyed sequence. For example, when the robot 202 hits the building 220, the building 220 is displayed as collapsing, and when the heavy robot 202 is landed on the ground, the road 222 is displayed as being concaved.

Therefore, even if the primary goal to be achieved in a video game is for the user or game player to control the principal character to beat the opponent such as the monster 212, the background displayed in the video game can be changed depending on details of the battle between the principal character and the opponent, resulting in realistic images displayed in the video game. The user can therefore experience simulated combats or battles between the principal character and the opponent, and remains interested in the video game.

In the above embodiment, a form of destruction is selected depending on the type of a background object to be destroyed, and the background object is rendered in a destroyed sequence and stored in the frame buffer 84 according to the rules of the selected form of destruction. Therefore, the destroyed sequence is displayed depending on the type of the background object. For example, if the background object is the building 220, then it is displayed in a destroyed sequence of "collapsing" or "being tilted". If the background object is the road 222, then it is displayed in a destroyed sequence of "being concaved". If the background object is the railroad 224, then it is displayed in a destroyed sequence of "being bent" or "being cut off". In the destroyed sequence of the building 220, it may be displayed as collapsing while producing black smokes or flames.

In the entertainment system 10, the display monitor 18 displays the frame 204 for changing the viewpoint as seen from the user, and the sight 206 movable in the frame 204 depending on the control input entered by the user. When the sight 206 contacts the frame 204, the viewpoint is changed in the direction that is indicated by the position where the sight 206 contacts the frame 204.

For example, if the frame 204 is of a circular shape, then when the sight 206 contacts a right region (in the direction of 3 PM) of the circular frame 204, the viewpoint is changed to the right, and when the sight 206 contacts an upper right region (in the direction of 2 PM) of the circular frame 204, the viewpoint is changed upward to the right.

Therefore, it is possible to change the viewpoint in the direction in which the sight 206 moves. The user can independently control the robot 202 and set the sight 206 while changing the viewpoint, and hence can easily make control actions in video games such as shooting games and combat games.

In the above embodiment, the display monitor 18 displays the icon 214 indicative of a position where another object such as the monster 212 as a target will appear, in contact with the frame 204. The displayed icon 214 allows the user to have an instantaneous recognition of the direction in and the height at which the opponent such as the monster 212 will appear. When the user brings the sight 206 into contact with the region of the frame 204 where the icon 214 is displayed, the viewpoint is changed in the direction of the opponent, allowing the user to set the sight 206 quickly on the opponent.

When the viewpoint is changed, it moves at a speed depending on the tilted interval K of the right joystick 46. Thus, the user can move the viewpoint slowly or quickly depending on the situation in which the principal character is placed, e.g., when the principal character searches the surrounding area or in case of emergency, e.g., when a monster appears. With the viewpoint being thus movable, the user finds themselves more easily absorbed in the video game, and remains interested in the video game for a long period of time.

In the entertainment system 10, the destruction displaying means 304 and the viewpoint changing means 302 are combined with each other to allow the user to play shooting games, combat games, etc., for example, with good controllability while experiencing simulated field battles or combats with realistically displayed destruction scenes.

With the entertainment system and recording medium according to embodiments of the present invention, even if the primary goal to be achieved in a video game is for the user or game player to control the principal character to beat the opponent, the background displayed in the video game can be changed depending on details of the battle between the principal character and the opponent, resulting in realistic images displayed in the video game.

With the entertainment system and recording medium according to embodiments of the present invention, furthermore, it is possible to change the viewpoint in the direction in which the sight moves. The user can independently control a displayed robot and set the sight while changing the viewpoint, and hence can easily make control actions in video games such as shooting games and combat games.

Although a certain preferred embodiment of the present invention has been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

**Claims**

**1.** An entertainment system comprising:

an entertainment apparatus (12) for executing various programs;
at least one manual controller (16) for entering control requests from the user into said entertainment apparatus (12);

a display unit (18) for displaying images outputted from said entertainment apparatus (12); and

destruction displaying means (304) for determining whether a background object (220, 222, 224) which is being displayed on the display unit (18) is destroyed or not based on positional information of the displayed background object (220, 222, 224) and positional information of a damage applying object (202, 212, 218), and displaying the background object (220; 222, 224) in a destroyed sequence if the background object has been determined as being destroyed.

2. An entertainment system according to claim 1, wherein said destruction displaying means (304) comprises:

determining means (332) for determining whether said background object (220, 222, 224) is to be destroyed or not based on the positional information of said background object (220, 222, 224) and the positional information of said damage applying object (202, 212, 218);

display form selecting means (340) for selecting a form of destruction depending on the type of the background object (220, 222, 224) to be destroyed; and

rendering means (342) for displaying said background object (220, 222, 224) in a destroyed sequence according to rules of the selected form of destruction.

3. An entertainment system according to claim 2, wherein said determining means (332) comprises: means for destroying said background object (220, 222, 224) in display if the positional information of said damage applying object (202, 212, 218) is included in the positional information of said background object (220, 222, 224).

4. An entertainment system comprising:

an entertainment apparatus (12) for executing various programs;

at least one manual controller (16) for entering control requests from the user into said entertainment apparatus (12);

a display unit (18) for displaying images outputted from said entertainment apparatus (12); and

viewpoint changing means (302) for displaying, on said display unit (18), a frame (204) to change a viewpoint and a sight (206) movable in said frame (204) depending on a control input entered from said manual controller (16) by the user, and changing the viewpoint in the direction depending on the control input entered by the user when said sight (206) approaches said frame (204).

5. An entertainment system according to claim 4, wherein said viewpoint changing means (302) comprises:

means for changing said viewpoint in display at a speed depending on the control input entered by the user.

6. An entertainment system according to claim 4 or 5, wherein said viewpoint changing means (302) comprises:

appearance direction displaying means (314, 316) for displaying an indicia (214), indicative of a direction in which a principal object (212) will appear, closely to said frame (204).

7. An entertainment apparatus for connection to a manual controller (16) for outputting a control request from the user, and a display unit (18) for displaying images, comprising:

destruction displaying means (304) for determining whether a background object (220, 222, 224) which is being displayed on the display unit (18) is destroyed or not based on positional information of the displayed background object (220, 222, 224) and positional information of a damage applying object (202, 212, 218), and displaying the background object (220, 222, 224) in a destroyed sequence if the background object has been determined as being destroyed.

8. An entertainment apparatus for connection to a manual controller (16) for outputting a control request from the user, and a display unit (18) for displaying images, comprising:

viewpoint changing means (302) for displaying, on said display unit (18), a frame (204) to change a viewpoint and a sight (206) movable in said frame (204) depending on a control input entered from said manual controller (16) by the user, and changing the viewpoint in the direction depending on the control input entered by the user when said sight (206) approaches said frame (204).

9. A recording medium storing a program and data for use in an entertainment system (10) having an entertainment apparatus (12) for executing various programs, at least one manual controller (16) for entering control requests from the user into said entertainment apparatus (12), and a display unit (18) for displaying images outputted from said entertainment apparatus (12), said program comprising the steps of:

determining whether a background object (220, 222, 224) which is being displayed on the display unit (18) is destroyed or not based on positional information of the displayed background object (220, 222, 224) and positional information of a damage applying object (202, 212, 218), and displaying the background object (220, 222, 224) in a destroyed sequence if the background object has been determined as being destroyed.

10. A recording medium according to claim 9, wherein said steps comprise the steps of:

determining whether said background object (220, 222, 224) is to be destroyed or not based on the positional information of said background object (220, 222, 224) and the positional information of said damage applying object (202, 212, 218);
selecting a form of destruction depending on the type of the background object (220, 222, 224) to be destroyed; and
displaying said background object (220, 222, 224) in a destroyed sequence according to rules of the selected form of destruction.

11. A recording medium according to claim 10, wherein said step of determining whether said background object (220, 222, 224) is to be destroyed or not comprises the step of:
destroying said background object (220, 222, 224) in display if the positional information of said damage applying object (202, 212, 218) is included in the positional information of said background object (220, 222, 224).

12. A recording medium storing a program and data for use in an entertainment system (10) having an entertainment apparatus (12) for executing various programs, at least one manual controller (16) for entering control requests from the user into said entertainment apparatus (12), and a display unit (18) for displaying images outputted from said entertainment apparatus (12), said program comprising the steps of:
displaying, on said display unit (18), a frame (204) to change a viewpoint and a sight (206) movable in said frame (204) depending on a control input entered from said manual controller (16) by the user, and changing the viewpoint in the direction depending on the control input entered by the user when said sight (206) approaches said frame (204).

13. A recording medium according to claim 12, wherein said steps comprise the step of:
changing said viewpoint in display at a speed depending on the control input entered by the user.

14. A recording medium according to claim 12 or 13, wherein said steps comprise the step of:
displaying an indicia (214), indicative of a direction in which a principal object (212) will appear, closely to said frame (204).

15. A program readable and executable by a computer, for use in an entertainment system (10) having an entertainment apparatus (12) for executing various programs, at least one manual controller (16) for entering control requests from the user into said entertainment apparatus (12), and a display unit (18) for displaying images outputted from said entertainment apparatus (12), said program comprising the steps of:
determining whether a background object (220, 222, 224) which is being displayed on the display unit (18) is destroyed or not based on positional information of the displayed background object (220, 222, 224) and positional information of a damage applying object (202, 212, 218), and displaying the background object (220, 222, 224) in a destroyed sequence if the background object has been determined as being destroyed.

16. A program readable and executable by a computer, for use in an entertainment system (10) having an entertainment apparatus (12) for executing various programs, at least one manual controller (16) for entering control requests from the user into said entertainment apparatus (12), and a display unit (18) for displaying images outputted from said entertainment apparatus (12), said program comprising the steps of:
displaying, on said display unit (18), a frame (204) to change a viewpoint and a sight (206) movable in said frame (204) depending on a control input entered from said manual controller (16) by the user, and changing the viewpoint in the direction depending on the control input entered by the user when said sight (206) approaches said frame (204).

FIG. 1

EP 1 106 220 A2

FIG. 2

FIG. 3

# FIG. 4

EP 1 106 220 A2

FIG. 5

23

FIG. 6

FIG. 7

## FIG. 7

GTE — 80

CPU

PERIPHERAL DEVICE CONTROLLER — 72, 74

MAIN MEMORY — 76

ROM — 78

60

GPU — 64, 82

FRAME BUFFER — 84

IMAGE DECODER — 86

SPU — 66

SOUND BUFFER — 88, 90

AUXILIARY CPU

DECODER — 98, 94

BUFFER — 96

OPTICAL DISK DRIVE — 70, 68

COMMUNICATION CONTROLLER — 58

DISPLAY MONITOR — 18

IMAGE DISPLAY SYSTEM

92

62

12

EP 1 106 220 A2

# FIG. 8

| | | |
|---|---|---|
| CPU 152 | PROGRAM MEMORY 154 | DIGITAL INPUT BLOCK 158 |
| MOTOR DRIVER 170L | MOTOR DRIVER 170R | WORKING RAM 156 |
| MOTOR 130L | MOTOR 130R | ANALOG INPUT BLOCK 160 |

COMMUNICATION CONTROLLER 150

162

16

EP 1 106 220 A2

# FIG. 9

(MANUAL CONTROLLER) 16

(ENTERTAINMENT APPARATUS) 12

52

TXD
RXD
SCK
DTR
DSR

P IO

CPU + RAM + ROM

S IO

S IO

POWER SUPPLY

MOTOR 130L

MOTOR DRIVER 170L

MOTOR 130R

MOTOR DRIVER 170R

172

EP 1 106 220 A2

FIG. 10

EP 1 106 220 A2

FIG. 11

EP 1 106 220 A2

FIG. 12

EP 1 106 220 A2

FIG. 13

EP 1 106 220 A2

FIG. 14

220    220

202

200

220

EP 1 106 220 A2

FIG. 15

EP 1 106 220 A2

# FIG. 16

EP 1 106 220 A2

```
                                                              300

                                              310              302
              ┌─────────────────────────────┐
              │   FRAME DISPLAYING MEANS    │
              └─────────────────────────────┘
                                              312
              ┌─────────────────────────────┐
              │   SIGHT DISPLAYING MEANS    │
              └─────────────────────────────┘
              ┌─────────────────────────────┐
              │   APPEARANCE DIRECTION      │
              │   CALCULATING MEANS         │
              └─────────────────────────────┘
                314                    316
              ┌─────────────────────────────┐
              │   ICON DISPLAYING MEANS     │
              └─────────────────────────────┘
              ┌─────────────────────────────┐
              │ VIEWPOINT CHANGING AND      │
              │   DISPLAYING MEANS          │
              └─────────────────────────────┘
                318                    320
              ┌─────────────────────────────┐
              │   SHOOTING DISPLAYING       │
              │         MEANS               │
              └─────────────────────────────┘
                                       322
              ┌─────────────────────────────┐
              │   MOVEMENT DISPLAYING       │
              │         MEANS               │
              └─────────────────────────────┘
                                       324
              ┌─────────────────────────────┐
              │  FLIGHT DISPLAYING MEANS    │
              └─────────────────────────────┘
```

| 16 | MANUAL CONTROLLER |

| 18 | DISPLAY MONITOR |

```
                                      304
              330
    ┌─────────────────────────────┐
    │   DAMAGE APPLYING           │
    │   OBJECT PROCESSING         │
    │        MEANS                │
    └─────────────────────────────┘
              332
    ┌─────────────────────────────┐
    │   DESTRUCTION               │
    │   DETERMINING MEANS         │
    └─────────────────────────────┘
              334
    ┌─────────────────────────────┐
    │   BACKGROUND OBJECT         │
    │   PROCESSING MEANS          │
    │  ┌───────────────────────┐  │
    │  │  DISPLAY FORM         │  │
    │  │  SELECTING MEANS      │  │
    │  └───────────────────────┘  │
    │    340            342       │
    │  ┌───────────────────────┐  │
    │  │  DESTRUCTION          │  │
    │  │  RENDERING MEANS      │  │
    │  └───────────────────────┘  │
    └─────────────────────────────┘
              336
    ┌─────────────────────────────┐
    │   IMAGE DISPLAYING          │
    │         MEANS               │
    └─────────────────────────────┘
```

| 84 | FRAME BUFFER |

FIG. 17

```
                    ┌──────────────────┐
                    │      START       │
                    └──────────────────┘
                             │
                    ┌──────────────────┐
                    │  DISPLAY FRAME   │  S1
                    └──────────────────┘
                             │
                    ┌──────────────────┐
                    │  DISPLAY SIGHT   │  S2
                    └──────────────────┘
                             │
          ┌──────────────────┤◄──────────────── ②
          │                  ▽  S3
          │         ◇ TARGET APPEARED ? ◇────── NO
          │                  │
          │                 YES
          │         ┌──────────────────┐           ┌──────────────────┐  S7
          │         │ READ COORDINATES │  S4       │  ELIMINATE ICON  │
          │         │ WHERE TARGET     │           └──────────────────┘
          │         │ APPEARED         │
          │         └──────────────────┘
          │                  │
          │         ┌──────────────────┐
          │         │ CALCULATE        │  S5
          │         │ DIRECTION FROM   │
          │         │ VIEWPOINT        │
          │         └──────────────────┘
          │                  │
          │         ┌──────────────────┐
          │         │ DISPLAY ICON IN  │  S6
          │         │ AREA             │
          │         │ CORRESPONDING TO │
          │         │ DIRECTION        │
          │         └──────────────────┘
          │                  │
          │                  ▼◄────────────────────┘
          │  NO     ◇ CONTROL INPUT ? ◇  S8
          └─────────
                             │
                            YES
                             ①
```

FIG. 18

(1)

S9
RIGHT JOYSTICK TILTED ? —— NO

YES

CALCULATE TILTED INTERVAL   S10

MOVE SIGHT DEPENDING ON TILTED INTERVAL   S11

S12
VIEWPOINT TO BE CHANGED ? —— NO

YES

MOVE VIEWPOINT AT SPEED DEPENDING ON TILTED INTERVAL   S13

S14
RIGHT JOYSTICK PRESSED ? —— NO

YES

SHOOT FROM WEAPON   S15

S16
LEFT JOYSTICK TILTED ? —— NO

YES

DISPLAY ROBOT IN MOTION   S17

S18
LEFT JOYSTICK PRESSED ? —— NO

YES

DISPLAY ROBOT IN UPWARD FLIGHT   S19

S20
(2) —— NO —— PROGRAM END REQUEST ?

YES

END

# FIG. 19

```
                    ┌─────────────┐
                    │    START    │
                    └─────────────┘
                           │
      ┌────────────────────┘
      │            ┌─────────────────────┐
      │            │  PERFORM DAMAGE     │  S101
      │            │  APPLYING OBJECT    │
      │            │  PROCESSING PROCESS │
      │            └─────────────────────┘
      │                       │
      │            ┌─────────────────────┐
      │            │ PERFORM DESTRUCTION │  S102
      │            │ DETERMINING PROCESS │
      │            └─────────────────────┘
      │                       │
      │            ┌─────────────────────┐
      │            │ PERFORM BACKGROUND  │  S103
      │            │ OBJECT PROCESSING   │
      │            │     PROCESS         │
      │            └─────────────────────┘
      │                       │
      │            ┌─────────────────────┐
      │            │  PERFORM IMAGE      │  S104
      │            │ DISPLAYING PROCESS  │
      │            └─────────────────────┘
      │                       │
      │           NO       S105
      └──────────◇─────────────────────◇
                  │  PROGRAM END        │
                  │    REQUEST ?        │
                  ◇─────────────────────◇
                           │ YES
                    ┌─────────────┐
                    │     END     │
                    └─────────────┘
```

# FIG. 20

```
        ┌─────────────┐
        │    START    │
        └─────────────┘
               │
        ┌─────────────┐
        │    i ← 0    │   S201
        └─────────────┘
               │
        ┌─────────────────┐
        │ READ OBJECT DATA │   S202
        └─────────────────┘
               │
        ┌──────────────────┐
        │ REWRITE VERTEX DATA │   S203
        └──────────────────┘
               │
        ┌──────────────────┐
        │ PERFORM RENDERING │   S204
        │     PROCESS       │
        └──────────────────┘
               │
        ┌──────────────────┐
        │ OBTAIN POSITIONAL │   S205
        │   INFORMATION     │
        └──────────────────┘
               │
        ┌──────────────┐
        │  i ← i + 1   │   S206
        └──────────────┘
               │
         NO      ╱╲        S207
        ◄───────╱   ╲
               ╱ i≥M ?╲
                ╲    ╱
                 ╲  ╱
                  ╲╱
                  │ YES
        ┌──────────────┐
        │    RETURN    │
        └──────────────┘
```

# FIG. 21

EP 1 106 220 A2

DESTRUCTION FLAG
(1/0 = DESTRUCTION DISPLAY NEEDED/ DESTRUCTION DISPLAY NOT NEEDED)

METHOD SELECTION FLAG
(1/0 = HIT ATTRIBUTE METHOD/RANDOM NUMBER METHOD)

| |
|---|
| ATTRIBUTE VALUE |
| TYPE OF BACKGROUND OBJECT |
| COUNT |
| ATTRIBUTE VALUE |
| TYPE OF BACKGROUND OBJECT |
| COUNT |

OTH RECORD

1ST RECORD

FIG. 22

START

j←0                                                        S301

READ OBJECT DATA                                           S302

REWRITE VERTEX DATA                                        S303

OBTAIN POSITIONAL
INFORMATION                                                S304

SEARCH FOR DAMAGING
APPLYING OBJECT WHICH
HITS BACKGROUND OBJECT                                     S305

S306
HIT ?                                          NO

YES

S307
BACKGROUND OBJECT                              NO
TO BE DESTROYED ?

YES

S308
BACKGROUND OBJECT                              YES
BEING DESTROYED ?

NO

HIT                     S309
ATTRIBUTE METHOD                               NO
?

YES

CALCULATE PRESENT
ATTRIBUTE VALUE                                            S310

SET DESTRUCTION FLAG                                       S311

j←j+1                                                      S312

NO                          S313
j≥N ?

YES

RETURN

EP 1 106 220 A2

# FIG. 23

```
                    ( START )
                        │
        ┌───────────────────────────────┐
        │           j←0                 │  S401
        └───────────────────────────────┘
    (12)───────────────→│
        ┌───────────────────────────────┐
        │        READ OBJECT DATA        │  S402
        └───────────────────────────────┘
                        │           S403
                       ╱ ╲
                      ╱   ╲          NO
              ╱ BACKGROUND OBJECT ╲ ──────────────┐
              ╲ TO BE DESTROYED ? ╱                │
                      ╲   ╱                         │
                       ╲ ╱                          │
                     YES │                          │
        ┌───────────────────────────────┐      ┌───────────────────────┐
        │        READ COUNT→k            │ S404 │   PERFORM RENDERING   │ S417
        └───────────────────────────────┘      │       PROCESS         │
                        │        S405           └───────────────────────┘
     NO                ╱ ╲                                  │
   ┌──────────────── ╱ k=0 ? ╲                            (13)
   │                  ╲     ╱
   │                   ╲   ╱
   │                  YES │      S406
   │                    ╱ ╲
   │           ╱ RANDOM NUMBER ╲    NO
   │           ╲   METHOD ?    ╱ ──────────────┐
   │                ╲     ╱                     │
   │                 YES │                      │
   │    ┌──────────────────────────┐   ┌──────────────────────────┐
   │    │  GENERATE RANDOM NUMBER  │S407│        READ FILE         │ S409
   │    └──────────────────────────┘   │ (TYPE, ATTRIBUTE VALUE)  │
   │                │                   └──────────────────────────┘
   │    ┌──────────────────────────┐            │
   │    │        READ FILE         │S408        │
   │    │  (TYPE, RANDOM NUMBER)   │            │
   │    └──────────────────────────┘            │
   └──────────────────→│←────────────────────────┘
        ┌───────────────────────────────┐
        │      REWRITE VERTEX DATA       │  S410
        └───────────────────────────────┘
                        │
        ┌───────────────────────────────┐
        │      PERFORM RENDERING         │  S411
        │          PROCESS               │
        └───────────────────────────────┘
                        │
        ┌───────────────────────────────┐
        │           k←k+1               │  S412
        └───────────────────────────────┘
                        │
                      (11)
```

41

FIG. 24